# EUROPEAN PATENT SPECIFICATION

(11) **EP 4 046 884 B1**
(45) Date of publication and mention of the grant of the patent: **14.08.2024**
(21) Application number: 22157139.1
(22) Date of filing: 16.02.2022
(51) Int. Cl.: B60W 30/095

(54) **COLLISION AVOIDANCE ASSIST APPARATUS**
VORRICHTUNG ZUR KOLLISIONSVERMEIDUNGSUNTERSTÜTZUNG
APPAREIL D'ASSISTANCE D'ÉVITEMENT DE COLLISION

(30) Priority: 17.02.2021 JP 2021023243
(43) Date of publication of application: 24.08.2022
(73) Proprietor: TOYOTA JIDOSHA KABUSHIKI KAISHA, Toyota-shi Aichi 471-8571 (JP)
(72) Inventor: KUNO, Takahiro, TOYOTA-SHI, AICHI, 471-8571 (JP); CHEN, Xi, TOYOTA-SHI, AICHI, 471-8571 (JP); SHIMBO, Yuto, TOYOTA-SHI, AICHI, 471-8571 (JP); ONAGI, Tsutomu, TOYOTA-SHI, AICHI, 471-8571 (JP)
(74) Representative: Cabinet Beau de Loménie

(56) References cited:
- EP-A2- 1 065 520
- EP-A2- 1 609 655
- EP-B1- 3 208 165
- WO-A2-2018/132608
- CN-A- 106 985 780
- US-A1- 2020 139 962

## Description

### BACKGROUND OF THE INVENTION

### 1. Field of the Invention

The present invention relates to a collision avoidance assist apparatus capable of executing collision avoidance assist control for avoiding a collision with a target existing in a front-and-lateral region being a region including at least diagonally front sides and lateral sides of a vehicle, and for reducing impact caused by a collision.

### 2. Description of the Related Art

Hitherto, there has been known a collision avoidance assist apparatus for executing collision avoidance assist control when there exists, around a vehicle, a target the vehicle is liable to collide therewith (hereinafter also referred to as "collision possibility"). An example thereof is described in EP 1065 520 A2. The collision avoidance assist apparatus includes a target information acquisition device for detecting targets existing around the vehicle, and acquiring information (target information) on the targets. The collision avoidance assist apparatus determines whether or not a collision condition (condition that is satisfied when collision possibility exists) is satisfied for each of the targets included in the target information, and executes the collision avoidance assist control for targets that satisfy the collision condition. With this configuration, as the number of targets detected by the target information acquisition device increases, an information amount of the target information increases, and there accordingly increases a processing load relating to the determination of whether or not the collision condition is satisfied. Consequently, a calculation device having higher performance is required.

Therefore, for example, in Japanese Patent No. 6758438, there is disclosed a vehicle control apparatus (hereinafter referred to as "related-art apparatus") for reducing the information amount of the target information. The target information acquisition device included in the related-art apparatus is formed of a plurality of sensors. As a result, when the plurality of sensors detect a target existing in a portion at which detection regions of those sensors overlap, positions (coordinates) of the target included in pieces of target information of the respective sensors are different from one another due to a difference in ranging timing, ranging errors, and the like of the respective sensors, and there may consequently occur a state in which a plurality of positions are detected.

A reliability reflecting detection precision for a target is assigned in advance to each sensor. When the above-mentioned state occurs, the related-art apparatus is configured to adopt the target information of a sensor having the highest reliability (that is, select the coordinate of the target included in this target information), and to exclude the target information of the remaining sensors, to thereby reduce the information amount of the target information. In Japanese Patent No. 6758438, the target information acquisition device and the target information are described as "surrounding information sensor" and "surrounding information", respectively.

The related-art apparatus can suppress a possibility that the information amount of the target information on one target unnecessarily increases, but no consideration is given to a reduction in information amount of the target information on a plurality of targets. As a result, the related-art apparatus cannot solve the above-mentioned problem (problem that stability of the collision avoidance assist control may decrease when the number of detected targets is large).

Thus, when the number of detected targets is large, the above-mentioned collision avoidance assist apparatus may be configured to select targets satisfying a predetermined selection condition, and to exclude, from the target information, targets that are not selected, to thereby reduce the information amount of the target information.

However, when the target information acquisition device is configured to detect targets existing in a front-and-lateral region of the vehicle, there is a possibility that targets having collision possibility cannot appropriately be selected under the uniformly set selection condition. That is, while a target having a relatively low collision possibility may be selected, a target having collision possibility may not be selected. In this case, the information amount of the target information can be reduced, but the collision avoidance assist control may not appropriately be executed.

### SUMMARY OF THE INVENTION

The present invention has been made in view of the above-mentioned problem. That is, one object of the present invention is to provide, for a collision avoidance assist apparatus including a front-and-lateral target information acquisition device capable of detecting a target existing in a front-and-lateral region of a vehicle, a technology of appropriately selecting a detected target, thereby being capable of appropriately executing the collision avoidance assist control while reducing a processing load.

According to at least one aspect of the present invention, there is provided a collision avoidance assist apparatus comprising: a front target information acquisition device configured to detect a target that exists in a predetermined front region including at least a front side of an own vehicle, and to acquire, as front target information, information on the detected target; a front-and-lateral target information acquisition device configured to detect a target that exists in a predetermined front-and-lateral region including at least a diagonally front side and a lateral side of the own vehicle, and to acquire, as front-and-lateral target information, information on the detected target; a vehicle information acquisition device configured to acquire vehicle information including a speed of the own vehicle and at least one of a yaw rate of the own vehicle or a steering input value being an input value which is based on steering operation of the own vehicle; and a control unit configured to execute, as collision avoidance assist control, at least one of warning control of issuing a warning to a driver of the own vehicle and automatic braking control of automatically applying a braking force to the own vehicle, when a target satisfies a collision condition that is satisfied when it is determined that the own vehicle is liable to collide with the target based on the front target information and the front-and-lateral target information, wherein the control unit is configured to select, from among targets included in the front-and-lateral target information, targets that satisfy a predetermined selection condition, and to determine whether each of the selected targets satisfies the collision condition, and wherein, when determining whether each of the selected targets satisfies the collision condition, the control unit is configured to determine whether the own vehicle is turning based on the vehicle information, and to change the selection condition between a case in which the own vehicle is not turning and a case in which the own vehicle is turning.

Of the targets existing in the front-and-lateral region, a target having collision possibility when the own vehicle is not turning and a target having collision possibility when the own vehicle is turning have different characteristics (for example, a speed and a position) from each other. Thus, a target having collision possibility is more likely to be selected by changing the selection condition between the case in which the own vehicle is not turning and the case in which the own vehicle is turning. With this configuration, the collision avoidance assist control can appropriately be executed while reducing the processing load (that is, reducing the number of targets for which the determination of whether or not the collision condition is satisfied is to be made).

According to at least one aspect of the present invention, the control unit is configured to: further determine whether the own vehicle is moving straight when the own vehicle is determined not to be turning; include, in a first case in which the own vehicle is moving straight, as the selection condition, a condition that is satisfied when a target is a first target that has a speed in a predetermined first speed range; and include, in a second case in which the own vehicle is turning, as the selection condition, a condition that is satisfied when a target is a second target that has a speed in a predetermined second speed range that has a lower limit value smaller than a lower limit value of the first speed range and has an upper limit value smaller than an upper limit value of the first speed range.

A target having collision possibility when the own vehicle is moving straight (the first case) is typically a target approaching the own vehicle at a relatively high speed from a left or right blind spot when the own vehicle is entering an intersection. Meanwhile, a target having collision possibility when the own vehicle is turning (the second case) is typically a target that is crossing or starts to cross a lane at a relatively low speed when the own vehicle is turning left or right at an intersection. The upper limit value and the lower limit value of the second speed range are smaller than the upper limit value and the lower limit value of the first speed range, respectively, and hence the first target is a target moving at higher speed than the second target. Thus, with the above-mentioned configuration, a target having collision possibility can be selected preferentially (appropriately) both in the first case and the second case.

According to at least one aspect of the present invention, the control unit is configured to: include, in the first case, as the selection condition, a condition that is satisfied when the first target exists in a predetermined first specific region which is included in the front-and-lateral region; and include, in the second case, as the selection condition, a condition that is satisfied when the second target exists in a predetermined second specific region which is included in the front-and-lateral region and is narrower than the first specific region.

The first target moves at higher speed than the second target, and it is thus possible to reduce, by setting the first specific region wider than the second specific region, a possibility that a target having collision possibility is not included in the first specific region when the own vehicle is moving straight (the first case). Meanwhile, the second target moves at lower speed than the first target, and it is thus possible to reduce, by setting the second specific region narrower than the first specific region, a possibility that a target having a low collision possibility is included in the second specific region. Thus, with the above-mentioned configuration, a target having collision possibility can be selected preferentially both in the first case and the second case.

According to at least one aspect of the present invention, the vehicle information acquisition device is configured to acquire the steering input value, and the control unit is, in the second case, configured to: calculate, based on the steering input value, a turning angle by which the own vehicle has turned from a point in time when the own vehicle starts turning to a current point in time; set, as the second specific region, a region including a left region and a right region, the left region including at least a left diagonally front side and a left lateral side of the own vehicle and the right region including at least a right diagonally front side and a right lateral side of the own vehicle when the turning angle exceeds a predetermined angle threshold value; and set, as the second specific region, one of the left region and the right region that is on a turning direction side of the own vehicle when the turning angle is equal to or smaller than the angle threshold value.

When the turning angle exceeds the angle threshold value, a target having collision possibility (that is, a target that is crossing or starts to cross a lane at a relatively low speed when the own vehicle is turning right or left at an intersection) is difficult to detect with the front target information acquisition device, and is positioned on one of both sides of the front region. Thus, by setting a region including both of the left region and the right region as the second specific region, a target having collision possibility can be selected preferentially.

Meanwhile, when the turning angle is equal to or smaller than the angle threshold value, among the targets having collision possibility, "a same-direction target moving in the same direction as the moving direction before the own vehicle starts the right or left turn" is difficult to detect with the front information acquisition device, and is positioned on the turning direction side with respect to the front region. However, "an opposed-direction target moving in a direction opposed to the above-mentioned moving direction" can be detected by the front information acquisition device, and is positioned in the front region. Thus, by setting, as the second specific region, one of the left region and the right region that is on the turning direction side, it is possible to preferentially select "a target that cannot be detected by the front information acquisition device yet having collision possibility".

According to at least one aspect of the present invention, when the number of targets that satisfy the selection condition exceeds a predetermined upper limit number in each of the first case and the second case, the control unit is configured to determine whether each target is continuously detected based on the front-and-lateral target information, and to calculate a reliability of each target based on a result of the determination, and the control unit is configured to add, as the selection condition, a reliability condition that is satisfied when a target is a high-reliability target that has a reliability equal to or higher than a predetermined reliability threshold value.

With this configuration, a target having a relatively high probability/degree of certainty can be selected preferentially.

According to at least one aspect of the present invention, the control unit is configured to select targets the number of which is equal to or smaller than the upper limit number from among the targets included in the front-and-lateral target information, in the first case, when the number of high-reliability targets exceeds the upper limit number, the control unit is configured to calculate, for each of the high-reliability targets, a simple time to collision defined by a distance to the own vehicle and a speed of the corresponding high-reliability target, and to select the upper limit number of the high-reliability targets in an order of a first priority which increases as the simple time to collision decreases, and in the second case, when the number of high-reliability targets exceeds the upper limit number, the control unit is configured to select the upper limit number of the high-reliability targets in an order of a second priority which increases as the distance decreases.

When the own vehicle is moving straight (the first case), even in a case in which a target is positioned relatively apart from the own vehicle, if the speed of the target is high, the target has collision possibility. Thus, by selecting a high-reliability target based on the index (simple time to collision) including, as a factor, not only the distance from the own vehicle but also the speed of the target (i.e., the own speed), it is possible to preferentially select a target having collision possibility.

Meanwhile, when the own vehicle is turning (the second case), the speed of a target is lower than the speed of a target in the first case, and it is thus possible to preferentially select a target having collision possibility by selecting a high-reliability target based on the distance from the own vehicle.

According to at least one aspect of the present invention, the control unit is configured to select targets the number of which is equal to or smaller than the upper limit number from among the targets included in the front-and-lateral target information, in the first case, when the number of high-reliability targets is smaller than the upper limit number, the control unit is configured to calculate, for each of low-reliability targets which do not satisfy the reliability condition, a simple time to collision defined by a distance to the own vehicle and a speed of the corresponding low-reliability target, and to select the low-reliability targets in an order of a first priority which increases as the simple time to collision decreases such that a sum of the number of the high-reliability targets and the number of the low-reliability targets matches the upper limit number, and in the second case, when the number of high-reliability targets is smaller than the upper limit number, the control unit is configured to select the low-reliability targets in an order of a second priority which increases as the distance decreases such that a sum of the number of the high-reliability targets and the number of the low-reliability targets matches the upper limit number.

With this configuration, even when the number of targets (high-reliability targets) satisfying the reliability condition is smaller than the upper limit number, it is possible to further select targets from among the targets not satisfying the reliability condition (low-reliability targets). Thus, it is possible to avoid a state in which the number of selected targets is extremely small, and it is thus possible to effectively use the configuration of "selecting the target the number of which is equal to or smaller than the upper limit number".

According to at least one aspect of the present invention, in the second case, the control unit is configured to include, as the selection condition, in addition to the condition that is satisfied when a target is the second target, a condition of selecting a predetermined number, which is smaller than the upper limit number, of the first targets that exist in a predetermined first specific region which is included in the front-and-lateral region.

When the own vehicle is turning (the second case), the own vehicle is liable to collide also with a first target (typically a target approaching the own vehicle at a relatively high speed). Thus, with the above-mentioned configuration, such a first target can also be selected, and hence the collision avoidance assist control can more appropriately be executed.

In order to facilitate the understanding of the invention, in the above description, the constituent features of the invention corresponding to at least one embodiment of the present invention are suffixed in parentheses with reference symbols used in the at least one embodiment. However, the constituent features of the invention are not intended to be limited to the at least one embodiment as defined by the reference symbols.

### BRIEF DESCRIPTION OF THE DRAWINGS

FIG. 1 is a schematic configuration diagram of a collision avoidance assist apparatus according to at least one embodiment of the present invention.
FIG. 2 is a diagram for illustrating detection regions of a front radar sensor, a front camera sensor, and front-and-lateral radar sensors.
FIG. 3 is a diagram for illustrating a specific region which is set when an own vehicle is moving straight.
FIG. 4 is a diagram for describing a method of selecting targets at the time when the own vehicle is moving straight.
FIG. 5A is a diagram for illustrating a specific region which is set when a degree of turn of the own vehicle is relatively small.
FIG. 5B is a diagram for illustrating a specific region which is set when a degree of turn of the own vehicle is relatively large.
FIG. 6 is a diagram for describing a method of selecting targets at the time when the degree of turn of the own vehicle is relatively small.
FIG. 7 is a diagram for describing a method of selecting targets at the time when the degree of turn of the own vehicle is relatively large.
FIG. 8 is a flowchart for illustrating a routine executed by a CPU of a collision avoidance assist ECU of the collision avoidance assist apparatus.
FIG. 9A is a flowchart (part 1) for illustrating a routine (target selection processing) executed by the CPU.
FIG. 9B is a flowchart (part 2) for illustrating a routine (target selection processing) executed by the CPU.
FIG. 10 is a flowchart for illustrating a routine (reliability processing) executed by the CPU.
FIG. 11 is a flowchart for illustrating a routine (priority processing) executed by the CPU.

### DESCRIPTION OF THE EMBODIMENTS

### (Configuration)

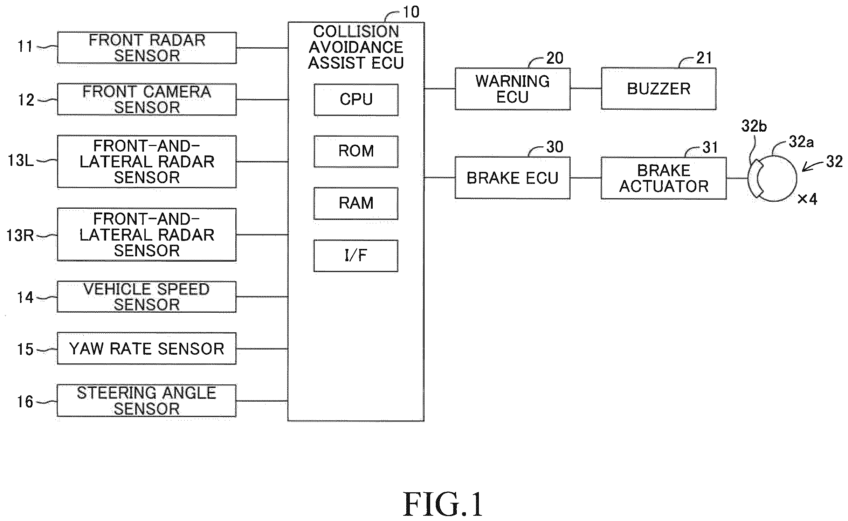

There is now described a collision avoidance assist apparatus (hereinafter also referred to as "apparatus of this embodiment") according to at least one embodiment of the present invention with reference to the drawings. As illustrated in FIG. 1, the apparatus of this embodiment includes a collision avoidance assist ECU 10, a warning ECU 20, and a brake ECU 30. The ECUs 10, 20, and 30 each include a microcomputer as a main component, and are connected to each other in a manner in which the ECUs 10, 20, and 30 can transmit and receive data to and from each other via a controller area network (CAN) (not shown). The term "ECU" is an abbreviation for "electronic control unit". The microcomputer includes a central processing unit (CPU), a read-only memory (ROM), a random-access memory (RAM), and an interface, for example, and the CPU is configured to implement various functions by executing instructions (programs, or routines) stored in the ROM. A part or all of the ECUs 10, 20 and 30 may be integrated as a controller into one ECU. A vehicle having the apparatus of this embodiment mounted therein is hereinafter referred to as "own vehicle".

The collision avoidance assist ECU 10 is connected to a front radar sensor 11, a front camera sensor 12, a front-and-lateral radar sensor 13L, a front-and lateral radar sensor 13R, a vehicle speed sensor 14, a yaw rate sensor 15, and a steering angle sensor 16, and is configured to acquire signals output or generated by those sensors each time a predetermined cycle (50 ms in the at least one embodiment) elapses. The collision avoidance assist ECU 10 is hereinafter also simply referred to as "ECU 10".

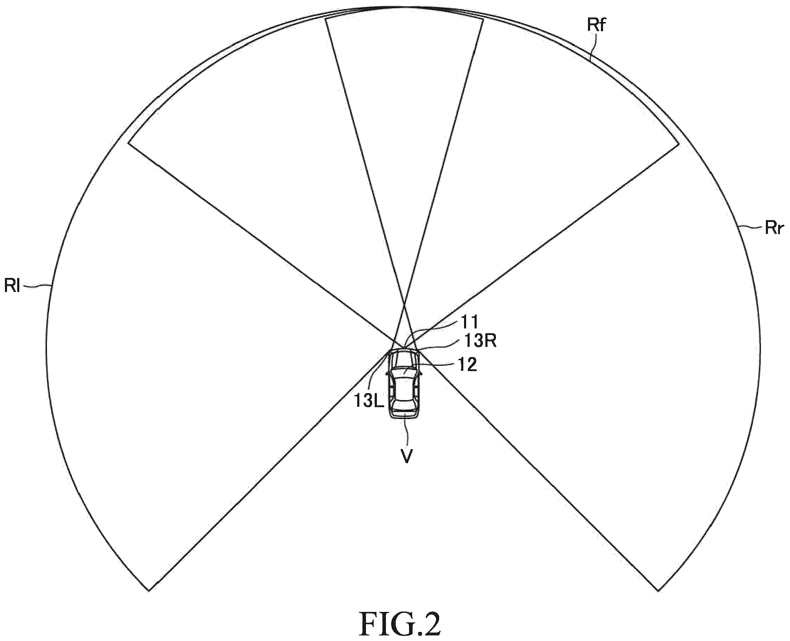

As illustrated in FIG. 2, the front radar sensor 11 is installed in a center portion of a front bumper of the own vehicle. The front radar sensor 11 has a function of detecting a target existing in a front region (in a strict sense, a region of from a diagonally left front side to a diagonally right front side) of the own vehicle, and acquiring information on the detected target. Specifically, the front radar sensor 11 irradiates a radio wave in the millimeter waveband to the front side, and receives, when a target exists, a reflected wave from the target. The front radar sensor 11 determines whether or not the target exists and calculates a relative relationship between the own vehicle and the target based on an irradiation timing, a reception timing, and the like of the radio wave. The relative relationship between the own vehicle and the target includes a distance from the own vehicle to the target, an orientation and a relative speed of the target with respect to the own vehicle, and the like. The targets include moving targets (moving vehicle and pedestrian and the like) and stationary targets (stationary vehicle and pedestrian, a guardrail, a median strip, and the like).

A region Rf of FIG. 2 indicates a region (detection region) in which the front radar sensor 11 can detect a target. The region Rf is line symmetrical about a front-and-rear axis of the own vehicle. A horizontal angle of view of the front radar sensor 11 is, for example, approximately 100°. A detection limit distance of the front radar sensor 11 is, for example, approximately 120 m. A scale of the own vehicle and a scale of each region are herein changed so that the drawings can be easily understood.

The front camera sensor 12 is installed on a rear surface of an inner mirror (room mirror/rear-view mirror) of the own vehicle. The front camera sensor 12 has a function of acquiring information on targets existing in the front region of the own vehicle. Specifically, the front camera sensor 12 takes images of a scenery on the front side of the own vehicle, and determines whether or not a target exists, and calculates the relative relationship between the own vehicle and the target based on the taken image data. The front camera sensor 12 is installed at a position slightly apart from the front radar sensor 11, but a region in which the front camera sensor 12 can detect a target is set substantially the same as the region Rf in the at least one embodiment.

The front radar sensor 11 detects targets existing in the region Rf, and outputs, as "first front target information", information on the targets to the ECU 10. An upper limit number of targets that can be output by the front radar sensor 11 as the first front target information is set in advance, and is, for example, 17. When targets the number of which exceeds the upper limit number exist in the region Rf, the front radar sensor 11 detects the targets up to the upper limit number by a well-known method.

Similarly, the front camera sensor 12 detects targets existing in the region Rf, and outputs, as "second front target information", information on the targets to the ECU 10. An upper limit number of targets that can be output by the front camera sensor 12 as the second front target information is set in advance, and is, for example, 17. When targets the number of which exceeds the upper limit number exist in the region Rf, the front camera sensor 12 detects the targets up to the upper limit number through a well-known method.

As described above, detection precision of a target is increased (described later) by using two types of sensors (front radar sensor 11 and front camera sensor 12) to detect a target existing in the region Rf. The front radar sensor 11 and the front camera sensor 12 are hereinafter sometimes collectively referred to as "front sensors 11 and 12".

The front-and-lateral radar sensor 13L is installed in a left corner portion of the front bumper of the own vehicle. The front-and-lateral radar sensor 13L has a function of acquiring information on targets existing in a front-and-lateral region on the left side of the own vehicle (in a strict sense, a region of from the front side to a left diagonally rear side of the own vehicle, that is, a region including at least the left diagonally front side and a left lateral side of the own vehicle).

The front-and-lateral radar sensor 13R is installed in a right corner portion of the front bumper of the own vehicle. The front-and-lateral radar sensor 13R has a function of acquiring information on targets existing in a front-and-lateral region on the right side of the own vehicle (in a strict sense, a region of from the front side to a right diagonally rear side of the own vehicle, that is, a region including at least the right diagonally front side and a right lateral side of the own vehicle).

Both of the front-and-lateral radar sensors 13L and 13R determine whether or not a target exists, and calculate the relative relationship between the own vehicle and the target by the same method as that of the front radar sensor 11. However, the front-and-lateral radar sensors 13L and 13R are different from the front radar sensor 11 in a point that the front-and-lateral radar sensors 13L and 13R are configured to detect only moving targets. Specifically, the front-and-lateral radar sensors 13L and 13R calculate a speed (that is, a ground speed) of a target based on the relative relationship between the own vehicle and the target, and detects only a moving target having the speed equal to or higher than a predetermined speed threshold value (for example, 2 km/h) as the target.

A region Rl and a region Rr of FIG. 2 indicate regions in which the front-and-lateral radar sensors 13L and 13R can detect a target, respectively. The region Rl and the region Rr are line symmetrical about a front-and-rear axis of the own vehicle. Both of horizontal angles of view of the front-and-lateral radar sensors 13L and 13R are, for example, approximately 150°, and both of detection limit distances thereof are, for example, approximately 120 m. The region Rl and the region Rr are positioned on the lateral sides of the own vehicle with respect to the region Rf. The region Rl and the region Rr partially overlap each other on the front side of the own vehicle. Moreover, the region Rl and the region Rf partially overlap each other in a region of from the front side to the left diagonally front side of the own vehicle. The region Rr and the region Rf partially overlap each other in a region of from the front side to the right diagonally front side of the own vehicle.

The front-and-lateral radar sensors 13L and 13R detect targets (moving targets in a strict sense) existing in the regions RI and Rr, respectively, and output, as "front-and-lateral target information", information on the targets to the ECU 10. An upper limit number of the total of targets that can be output by the front-and-lateral radar sensors 13L and 13R as the front-and-lateral target information is set in advance, and is, for example, 18. When targets the number of which exceeds the upper limit number exist in the region Rl or the region Rr, the front-and-lateral radar sensor 13L or 13R detects the targets up to the upper limit number by a well-known method. The front-and-lateral radar sensors 13L and 13R are installed for a purpose of mainly detecting, among the targets having collision possibility, targets existing outside the detection region Rf of the front sensors 11 and 12.

The vehicle speed sensor 14 generates a signal corresponding to a moving speed (vehicle speed) of the own vehicle. The ECU 10 acquires the signal generated by the vehicle speed sensor 14 and calculates the vehicle speed based on the signal.

The yaw rate sensor 15 generates a signal corresponding to a yaw rate acting on the own vehicle. The ECU 10 acquires the signal generated by the yaw rate sensor 15 and calculates the yaw rate based on the signal. In the at least one embodiment, the yaw rate at the time when the own vehicle is turning toward the right direction is defined as a positive value. The yaw rate at the time when the own vehicle is turning toward the left direction is defined as a negative value.

The steering angle sensor 16 (steering input value acquisition device) detects a steering angle (steering input value) of a steering wheel of the own vehicle, and outputs a detection signal of the steering angle to the ECU 10. In the at least one embodiment, the steering angle at the time when the steering wheel is being steered toward the right direction is defined as a positive value. The steering angle at the time when the steering wheel is being steered toward the left direction is defined as a negative value.

The warning ECU 20 is connected to a buzzer 21. The buzzer 21 is built into a meter panel (not shown). The warning ECU 20 is hereinafter also simply referred to as "ECU 20". The ECU 10 is configured to be capable of transmitting a warning command (described later) to the ECU 20. When the ECU 20 receives the warning command, the ECU 20 causes the buzzer 21 to emit sound in response to the command. As a result, the ECU 10 can issue warning to a driver of the own vehicle through the ECU 20.

The brake ECU 30 is connected to a brake actuator 31. The brake actuator 31 is arranged in a hydraulic circuit arranged between a master cylinder (not shown) for pressurizing hydraulic fluid by a pedaling force of a brake pedal and a friction brake mechanism 32 arranged on each wheel. The friction brake mechanism 32 includes a brake disc 32a fixed to the wheel and a brake caliper 32b fixed to a vehicle body. The friction brake mechanism 32 presses a brake pad against the brake disc 32a to generate a friction braking force by causing a wheel cylinder built in the brake caliper 32b to be activated by the hydraulic pressure of the hydraulic fluid supplied from the brake actuator 31. The brake ECU 30 is hereinafter also simply referred to as "ECU 30".

The ECU 10 is configured to be capable of transmitting a braking command (described later) to the ECU 30. When the braking command is received, the ECU 30 drives (controls) the brake actuator 31 in accordance with the command. As a result, the ECU 10 can automatically apply a braking force to the own vehicle via the ECU 30.

### (Details of Operation)

Description is now given of details of operation of the ECU 10. The ECU 10 acquires the first front target information from the front radar sensor 11, acquires the second front target information from the front camera sensor 12, and acquires the front-and-lateral target information from the front-and-lateral radar sensors 13L and 13R. The ECU 10 fuses those pieces of target information. Specifically, based on a plurality of pieces of target information on targets redundantly detected in an overlapping region of at least two regions of the region Rf, the region Rl, and the region Rr, the ECU 10 generates one piece of target information. As a result, detection precision (that is, accuracy of the target information) of the target detected redundantly increases. After that, the ECU determines whether or not the target satisfies a collision condition (condition satisfied when collision possibility exits) based on the fused target information, and the ECU 10 executes collision avoidance assist control when the collision condition is satisfied. The collision condition is described later.

As the information amount of the target information increases (that is, the number of detected targets increases), there increases a load (calculation load) imposed by subsequent processing (that is, the fusion processing for the pieces of target information and the processing of determining whether or not the collision condition is satisfied). Thus, the ECU 10 is configured to execute target selection processing for the targets included in the front-and-lateral target information, and to exclude target information on targets not selected through this processing from the front-and-lateral target information, to thereby reduce the load on the subsequent processing. The target selection processing is processing of selecting targets so that the number of targets is equal to or smaller than a predetermined upper limit number "n" (four in the at least one embodiment). A specific description is now given of this processing. Other processing of selecting targets may be executed also for the targets included in the front target information, but the apparatus of this embodiment has an object to reduce the information amount of the front-and-lateral target information, and description of this processing is thus omitted.

### <Target Selection Processing>

In the target selection processing, it is desired that a target having collision possibility be selected preferentially, and that a target having a relatively low collision possibility be excluded. Characteristics of the target having collision possibility change depending on a moving state of the own vehicle. Specifically, a target having collision possibility (other than the targets detected by the front sensors 11 and 12) at the time when the own vehicle is moving straight are typically targets approaching the own vehicle at a relatively high speed from a left or right blind spot when the own vehicle is entering an intersection. In contrast, a target having collision possibility when the own vehicle is turning (other than the targets detected by the front sensors 11 and 12) is typically a target that is crossing or starts to cross a lane at a relatively low speed when the own vehicle is turning left or right at an intersection. The "lane" means a lane into which the own vehicle enters after the right or left turn.

### (Selection of Targets Based on Speed and Position)

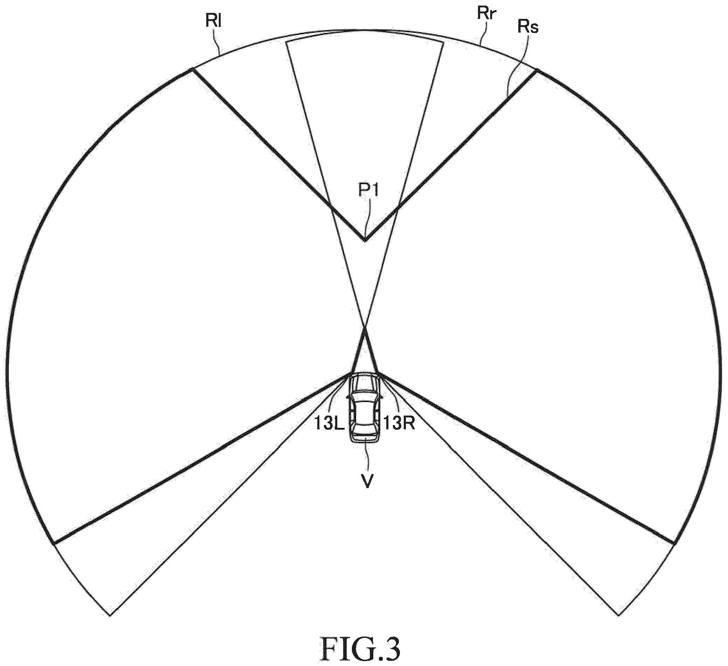

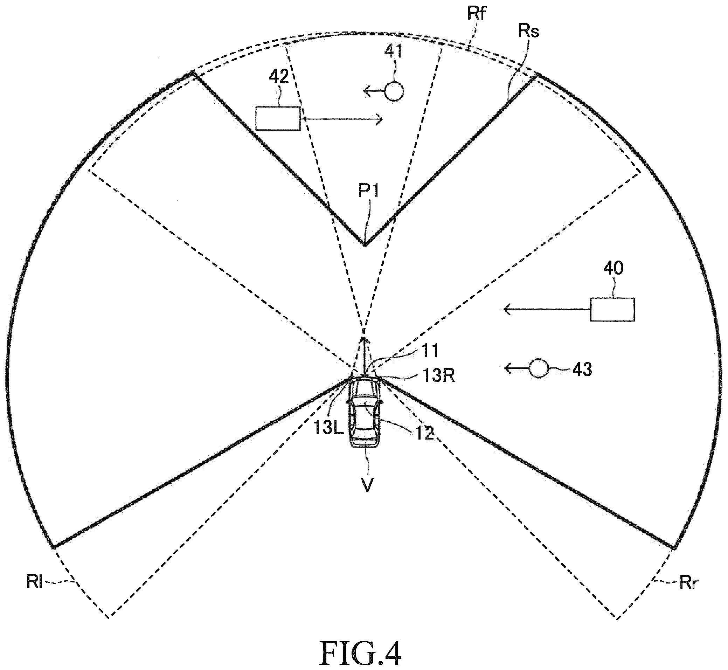

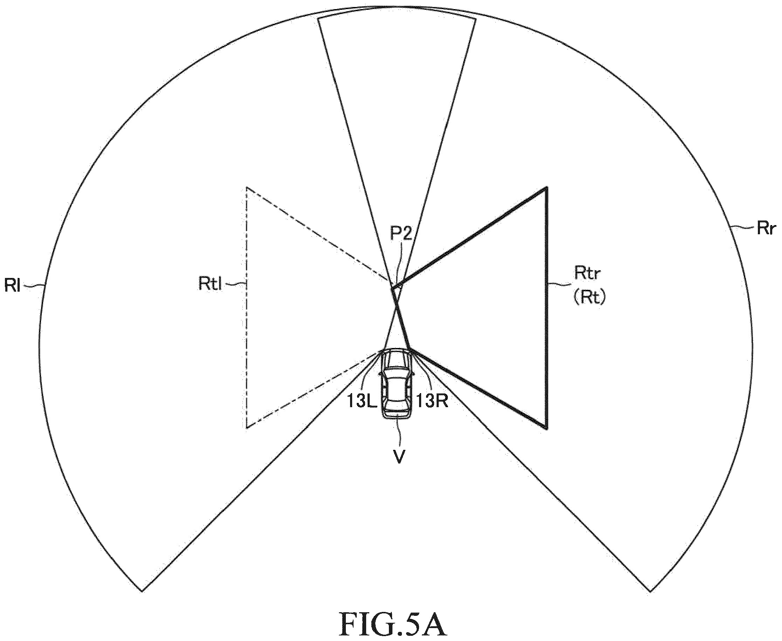

Thus, the ECU 10 changes a method of selecting a target between a case in which the own vehicle is moving straight and a case in which the own vehicle is turning. Specifically, when the own vehicle is moving straight, the ECU 10 selects, among the targets included in the front-and-lateral target information, "targets existing in a relatively wide specific region Rs (see FIG. 3 and FIG. 4, described later) and moving at a relatively high speed". The target moving at a relatively high speed is hereinafter also simply referred to as "high-speed target". Meanwhile, when the own vehicle is turning, the ECU 10 selects "targets existing in a relatively narrow specific region Rt (see FIG. 5A to FIG. 7, described later) and moving at a relatively low speed". The target moving at a relatively low speed is hereinafter also simply referred to as "low-speed target". In the at least one embodiment, a range of the speed (ground speed) of the high-speed target is set as a range including a legal speed limit of a vehicle. A range of the speed of the low-speed target is set as a range including an average speed of pedestrians. A lower limit value and an upper limit value of the speed range of the low-speed target are smaller than a lower limit value and an upper limit value of the speed range of the high-speed target, respectively. The case in which the own vehicle is moving straight and the case in which the own vehicle is turning correspond to an example of a "first case" and an example of a "second case", respectively. The high-speed target and the speed range thereof correspond to an example of a "first target" and an example of a "first speed range", respectively. The low-speed target and the speed range thereof correspond to an example of a "second target" and an example of a "second speed range", respectively.

Whether the own vehicle is moving straight or turning can be determined based on a current turning radius of the own vehicle. That is, the ECU 10 acquires the current vehicle speed and the current yaw rate from the vehicle speed sensor 14 and the yaw rate sensor 15, respectively, and calculates a turning radius "r" by dividing the vehicle speed by the yaw rate. When the own vehicle is turning toward the right direction, the turning radius "r" takes a positive value. When the own vehicle is turning toward the left direction, the turning radius "r" takes a negative value. The ECU 10 determines that the own vehicle is turning when the magnitude of the turning radius "r" is equal to or smaller than a predetermined first radius threshold value r1th, and determines that the own vehicle is moving straight when the magnitude of the turning radius "r" exceeds a predetermined second radius threshold value r2th (>rlth). Meanwhile, when a relationship of "r1th<|r|≤r2th" is satisfied, the ECU 10 determines that whether the own vehicle is moving straight or turning cannot be identified, and executes subsequent processing without executing the target selection processing. The case in which the relationship of "r1th<|r|≤r2th" is satisfied is, for example, a case in which steered wheels of the own vehicle are temporarily steered through an unintended steering operation. The vehicle speed and the yaw rate are examples of "vehicle information". The vehicle speed sensor 14 and the yaw rate sensor 15 correspond to examples of "vehicle information acquisition device".

The configuration for determining whether or not the own vehicle is moving straight and whether or not the own vehicle is turning is not limited to the configuration of making the determination based on the turning radius, and may be configured to make the determination based on the current vehicle speed, steering angle, and steering angle speed. The steering angle speed can be acquired by a steering angle speed sensor (not shown). The steering angle and the steering angle speed correspond to examples of a "steering input value" being an input value which is based on the steering operation (operation on the steering wheel) of the own vehicle. In this case, the vehicle speed, the steering angle, and the steering angle speed correspond to examples of the "vehicle information", and the vehicle speed sensor 14, the steering angle sensor 16, and the steering angle speed sensor correspond to examples of the "vehicle information acquisition device".

As illustrated in FIG. 3, the specific region Rs is a region provided in the regions RI and Rr, and a shape and a size thereof can be determined based on experiments and simulation by obtaining a distribution of targets having collision possibility when an own vehicle V is moving straight. The high-speed target has a long moving distance per unit period. Thus, the specific region Rs is set so that a length in a radial direction thereof is equal to the detection limit distance of the radar sensors 13L and 13R, and the specific region Rs mainly includes the diagonally front sides and the lateral sides of the own vehicle V. A point P1 of the specific region Rs is positioned on an extension line of the front-and-rear axis of the own vehicle V. A length from a center portion of a front end of the own vehicle V to the point P1 can be set to, for example, approximately 10 m based on a lane width of a plurality of lanes intersecting with a moving lane of the own vehicle V.

FIG. 4 is a diagram for illustrating an example of the method of selecting targets at the time when the own vehicle V is moving straight. As illustrated in FIG. 4, four targets 40 to 43 exist in the regions Rl and Rr (that is, target information on the targets 40 to 43 is included in the front-and-lateral target information). The targets 40 and 42 are high-speed targets. The targets 41 and 43 are low-speed targets.

The ECU 10 selects, among the targets 40 to 43, the target 40 being the high-speed target existing in the specific region Rs. Among the targets 41 to 43, which are not selected, the targets 41 and 42 exist also in the region Rf (detection region of the front sensors 11 and 12), and are thus detected by the front sensors 11 and 12. As described above, the specific region Rs is set such that the specific region Rs does not include "the region in which targets can appropriately be detected by the front sensors 11 and 12", and thereby "targets that cannot be detected by the front sensors 11 and 12 yet having collision possibility" can be selected preferentially. Meanwhile, although the target 43 exists in the specific region Rs, the target 43 has a relatively low speed and a slight moving distance per unit period. Thus, even when the target 43 moves toward a direction toward which the target 43 approaches the own vehicle V, the target 43 has an extremely low collision possibility. Thus, the targets having the low collision possibility can be excluded by avoiding the selection of the low-speed targets existing in the specific region Rs.

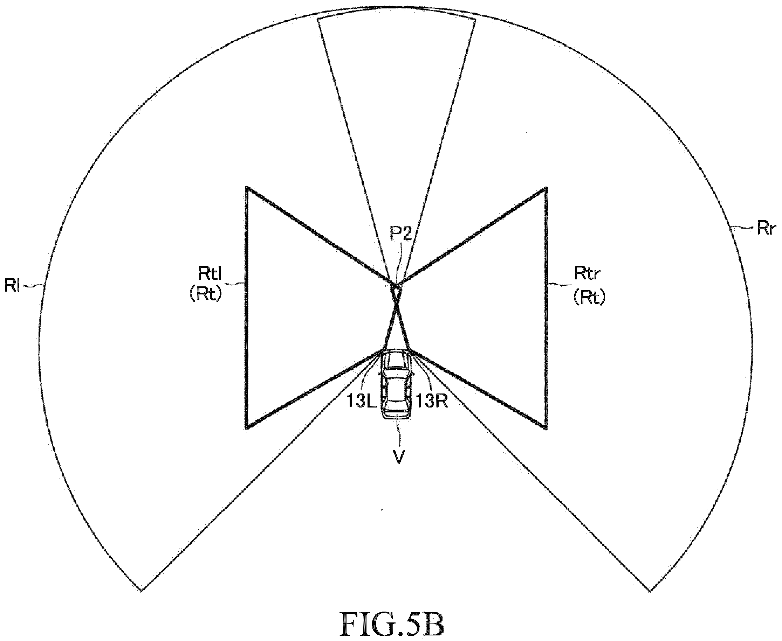

Meanwhile, as illustrated in FIG. 5A and FIG. 5B, the specific region Rt is a region provided in the region Rl and/or the region Rr, and a shape and a size thereof can be determined based on experiments and simulation by obtaining a distribution of targets having collision possibility when the own vehicle V is turning. The low-speed target has a short moving distance per unit period. Thus, the specific region Rt is narrower than the specific region Rs, and is set so that the specific region Rt is included in the specific region Rs in the at least one embodiment. The specific region Rt includes one of a left region Rtl and a right region Rtr or both of the left region Rtl and the right region Rtr depending on a degree of the turn of the own vehicle V.

FIG. 5A is a diagram for illustrating a state in which the own vehicle V is turning to the right direction at a relatively small degree of turn. FIG. 5B is a diagram for illustrating a state in which the own vehicle V is turning to the right direction at a relatively large degree of turn. As illustrated in FIG. 5A and FIG. 5B, the ECU 10 sets, among the left region Rl and the right region Rr, the region (right region Rtr in this example) on the side of the turning direction as the specific region Rt when the degree of turn is relatively small. The ECU 10 sets both of the left region Rtl and the right region Rtr as the specific region Rt when the degree of turn is relatively large. The former specific region Rt is hereinafter sometimes referred to as "turning-direction specific region Rt". The latter specific region Rt is hereinafter sometimes referred to as "both-direction specific region Rt". Whether the degree of turn is small or large can be determined based on whether or not a turning angle (angle by which the own vehicle V has turned from a point in time when the own vehicle V starts turning to the current point in time) θ exceeds a predetermined angle threshold value θth. The turning angle θ can be calculated by dividing a moving distance from a point in time when the own vehicle V starts turning to the current point in time by the turning radius "r". The angle threshold value θth can be determined in advance based on the horizontal angles of view of the front sensors 11 and 12. In place of the turning angle θ, a turning angle-related value may be used. In this case, whether the degree of turn is small or large can be determined based on whether or not the turning angle-related value exceeds a predetermined related value threshold value. The turning angle-related value can be calculated through time integration of a product of the vehicle speed and the steering angle (angle acquired from the steering angle sensor 16).

The left region Rtl is positioned in the region Rl. The right region Rtr is positioned in the region Rr. The region Rtl and the region Rtr are line symmetrical about the front-and-rear axis of the own vehicle V. A length in the vehicle width direction of a region including the left region Rtl and the right region Rtr is constant along the front-and-rear axis, and is, for example, approximately 25 m. A maximum value of a length in the front-and-rear axis direction is, for example, approximately 20 m. A length from the center portion of the front end of the own vehicle V to a point P2 can be set to, for example, approximately 5 m.

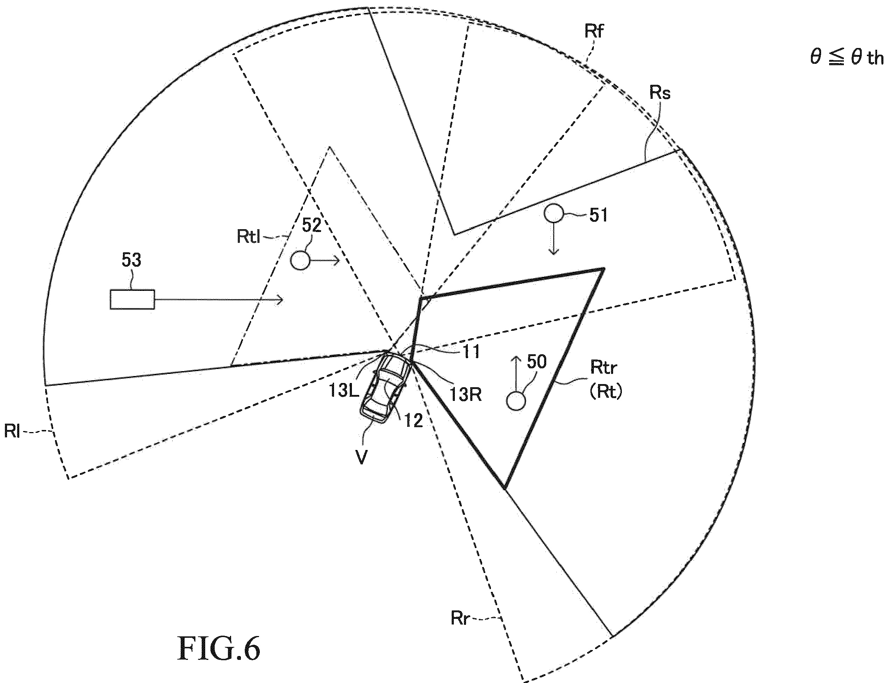

FIG. 6 is a diagram for illustrating an example of the method of selecting the target in a case in which the degree of turn toward the right direction is relatively small (θ≤θth). As illustrated in FIG. 6, the four targets 50 to 53 exist in the regions Rl and Rr (that is, the target information on the targets 50 to 53 is included in the front-and-lateral target information). The targets 50 to 52 are low-speed targets. The target 53 is a high-speed target.

The ECU 10 selects, among the targets 50 to 53, the target 50 being the low-speed target existing in a turning-direction specific region Rt (right region Rtr in this example). Among the targets 51 to 53, which are not selected, the target 51 exists also in the region Rf, and is thus detected by the front sensors 11 and 12. As described above, the specific region Rt is set such that the specific region Rt does not include "the region in which targets can appropriately be detected by the front sensors 11 and 12", and thereby "targets that cannot be detected by the front sensors 11 and 12 yet having collision possibility" can be selected preferentially.

In more detail, the target 50 is a same-direction low-speed target that moves in the same direction as the moving direction of the own vehicle V before the start of the right turn. The target 51 is an opposed-direction low-speed target that moves in a direction opposed to the above-mentioned moving direction. The targets 50 and 51 are targets that are crossing or start to cross a lane (lane which the own vehicle V enters after the right turn), and both of the targets 50 and 51 thus have collision possibility. In general, when the degree of turn is relatively small, an opposed-direction low-speed target (target 51 in this example) is detected by the front sensors 11 and 12, and hence the turning-direction specific region Rt is set to such a shape and a size that same-direction low-speed targets (target 50 in this example) can mainly be detected.

Meanwhile, although the target 52 exists in the left region Rtl (that is, the region on the opposite side of the turning direction), the target 52 has a relatively low speed and a slight moving distance per unit period. Thus, even when the target 52 moves toward the direction toward which the own vehicle V turns, the target 52 has an extremely low collision possibility. Thus, the targets having the low collision possibility can be excluded by avoiding the selection of the low-speed targets existing in one of the left region Rtl and the right region Rtr that is on the opposite side of the turning direction.

In contrast, although the target 53 is the high-speed target existing also in the specific region Rs and collision possibility thereof is lower than that of each of the targets 50 and 51, but the target 53 has a possibility of collision (side collision) with the own vehicle V when the target 53 continues the current moving state. Thus, when the number of low-speed targets existing in the specific region Rt is smaller than "n", the ECU 10 is configured to be capable of additionally selecting high-speed targets existing in the specific region Rs (described later). The target 53 is typically a vehicle moving, on the lane that the own vehicle V enters after the right turn, toward the direction toward which the target 53 approaches the own vehicle V.

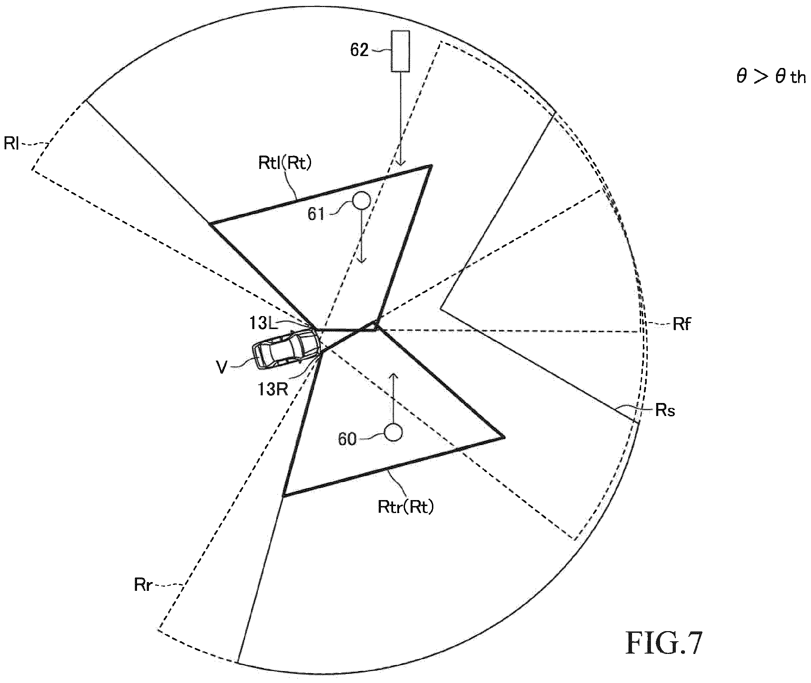

FIG. 7 is a diagram for illustrating an example of the method of selecting the target in a case in which the degree of turn toward the right direction is relatively large (θ>θth). As illustrated in FIG. 7, three targets 60 to 62 exist in the regions Rl and Rr (that is, the target information on the targets 60 to 62 is included in the front-and-lateral target information). The targets 60 and 61 are low-speed targets. The target 62 is a high-speed target.

The ECU 10 selects, among the targets 60 to 62, the targets 60 and 61 being the low-speed targets existing in the both-direction specific region Rt. In more detail, the target 60 is the same-direction low-speed target. The target 61 is the opposed-direction low-speed target. Both of the targets 60 and 61 have collision possibility. In general, as the degree of turn increases, an opposed-direction low-speed target (target 61 in this example) is less likely to be detected by the front sensors 11 and 12. Thus, when the degree of turn is relatively large, the both-direction specific region Rt is set to such a shape and a size that not only same-direction low-speed targets (target 60 in this example), but also opposed-direction low-speed targets can be detected.

In contrast, although the target 62 is the high-speed target existing also in the specific region Rs and collision possibility thereof is lower than that of each of the targets 60 and 61, the target 62 has a possibility of collision (side collision) with the own vehicle V when the target 62 continues the current moving state. Thus, as in the case of a relatively small degree of turn, when the number of low-speed targets existing in the specific region Rt is smaller than "n", the ECU 10 is configured to be capable of additionally selecting high-speed targets existing in the specific region Rs (described later). The target 62 is typically a vehicle moving, on the opposed lane (lane opposed to the moving lane before the own vehicle V starts the right turn), toward the direction toward which the target 62 approaches the own vehicle V.

When the own vehicle V is moving straight, the ECU 10 counts high-speed targets of the targets in the specific region Rs. The number of high-speed targets is equal to or smaller than "n" (=4), the ECU 10 selects all of those high-speed targets. After that, the ECU 10 excludes (deletes), from the front-and-lateral target information, target information on targets that are not selected among the targets existing in the regions Rl and Rr. The target that is not selected is also referred to as "non-selected target". In the example of FIG. 4, the high-speed targets in the specific region Rs include only the target 40 (that is, the number is equal to or smaller than four), and the ECU 10 thus selects the target 40, and excludes the target information on the non-selected targets 41 to 43 from the front-and-lateral target information. "Excluding the target information on the non-selected targets from the front-and-lateral target information" is hereinafter also simply referred to as "excluding the non-selected target information".

When the own vehicle V is turning (irrespective of whether the degree of turn is small or large), the ECU 10 counts low-speed targets of the targets in the specific region Rt. When the number of low-speed targets is equal to "n", the ECU 10 selects all of those low-speed targets, and excludes the non-selected targets. Meanwhile, when the number of low-speed targets in the specific region Rt is smaller than "n" in the same case, the ECU 10 first selects all of those low-speed targets. After that, when high-speed targets exist in the specific region Rs, the ECU 10 additionally selects the high-speed targets until the total number of selected targets reaches "n", and then excludes the non-selected targets. In the example of FIG. 6, the low-speed targets in the specific region Rt include only the target 50 (that is, the number is smaller than four), and the ECU 10 thus first selects the target 50. Moreover, the high-speed target 53 exists in the specific region Rs, and the ECU 10 thus additionally selects the target 53. After that, the ECU 10 excludes the non-selected targets 51 and 52. A method of additionally selecting high-speed targets is described later.

As apparent from the description given above, even when low-speed targets exist in the specific region Rs in the case in which the own vehicle V is moving straight and the number of high-speed targets in the specific region Rs is smaller than "n", the ECU 10 does not execute the processing of additionally selecting those low-speed targets. This is because the possibility that the own vehicle V collides with the low-speed targets in the specific region Rs is extremely low when the own vehicle V is moving straight (see the target 43 of FIG. 4).

### (Reliability Processing)

In contrast, when the number of high-speed targets in the specific region Rs exceeds "n" in the case in which the own vehicle is moving straight, the ECU 10 executes reliability processing of calculating a reliability for each of those high-speed targets and extracting targets having a reliability equal to or higher than a predetermined reliability threshold value. A specific description is now given of a method of calculating the reliability.

The reliability is an index for indicating probability of a target, and can take a value of from 0 points to 200 points. An initial value of the reliability of a target (that is, a reliability in a cycle in which the target is first detected by the front-and-lateral radar sensor 13L or 13R) is set to 30 points. When the target is continuously detected over a plurality of cycles, 60 points are added per cycle. However, when the reliability reaches 200 points, the reliability no longer increases. Meanwhile, in a case in which the detection of the target is interrupted in the course, the reliability is subtracted by 10 points when the interruption period continues for one cycle, 30 points when the interruption period continues for two cycles, and 100 points when the interruption period continues for three or more cycles. However, when the reliability reaches 0 points, the reliability no longer decreases.

For example, when a certain target is continuously detected over two cycles after a cycle in which the target is first detected, the reliability of the target is 150 points (30+60×2). When the target is further continuously detected over two cycles, the reliability of this target becomes 200 points. Meanwhile, when another certain target is not detected over two cycles after the reliability reaches 200 points, the reliability of this target becomes 170 points (200-30). When the target is not detected further for four cycles after that, the reliability of the target reaches 0 points (200-200). The reliability threshold value can be set to any value larger than the initial value (30 points) of the reliability based on experiments or simulation.

The ECU 10 calculates the reliability of each target as described above, and extracts targets having a reliability equal to or higher than the reliability threshold value (hereinafter also referred to as "high-reliability target"). A target having a reliability lower than the reliability threshold value is hereinafter also referred to as "low-reliability target".

After the reliability processing is finished, when the number of extracted high-reliability targets is equal to "n", the ECU 10 selects all of those high-reliability targets, and excludes the non-selected targets. For example, consideration is now given of a case in which, when nine high-speed targets and three low-speed targets exist in the regions RI and Rr, and seven high-speed targets thereamong exist in the specific region Rs, the number of high-reliability targets extracted through the reliability processing is four (=n). In this case, the ECU 10 selects those four high-reliability targets, and then excludes the remaining eight non-selected targets (three low-reliability targets, two high-speed targets to which the reliability processing has not been applied, and three low-speed targets).

In contrast, when the number of extracted high-reliability targets is not "n" (that is, when the number of high-reliability targets is smaller than "n" or larger than "n"), the ECU 10 execute priority processing (described later) so that the number of selected targets reaches "n".

In another case, when the number of low-speed targets in the specific region Rt exceeds "n" in the case in which the own vehicle is turning, the ECU 10 applies the above-mentioned reliability processing to each of those low-speed targets.

After the reliability processing is finished, when the number of extracted high-reliability targets is equal to "n", the ECU 10 selects all of those high-reliability targets, and excludes the non-selected targets. For example, consideration is now given of a case in which, when eleven low-speed targets and five high-speed targets exist in the regions RI and Rr, and nine low-speed targets thereamong exist in the specific region Rt, the number of high-reliability targets extracted through the reliability processing is four (=n). In this case, the ECU 10 selects those four high-reliability targets, and then excludes the remaining twelve non-selected targets (five low-reliability targets, two high-speed targets to which the reliability processing has not been applied, and five high-speed targets).

In contrast, when the number of extracted high-reliability targets is not "n" (that is, when the number of high-reliability targets is smaller than "n" or larger than "n"), the ECU 10 execute priority processing (described later) so that the number of selected targets reaches "n".

### (Priority Processing)

As described above, the priority processing is executed when the number of high-speed targets in the specific region Rs exceeds "n" (during the straight moving) or when the number of high-reliability targets extracted through the reliability processing is not "n" in the case in which the number of low-speed targets in the specific region Rt exceeds "n" (during the turn). Description is now given in sequence.

When the number of high-reliability targets is smaller than "n" in the case in which the own vehicle is moving straight, the ECU 10 selects all of those high-reliability targets. After that, the ECU 10 calculates a simple time to collision for each of the remaining low-reliability targets. The simple time to collision is a simple version of a time to collision (period of time predicted to be required for the own vehicle to collide with a target). Prediction precision of the simple time to collision is not as accurate as the time to collision, but a degree of urgency for the own vehicle to collide with a target can be calculated at a relatively low load. The time to collision is hereinafter referred to as "TTC". The simple time to collision is referred to as "simple TTC".

The simple TTC can be calculated by dividing "the distance from the own vehicle to a target" by "a speed component of the target moving toward the own vehicle" based on the front-and-lateral target information. The ECU 10 selects the low-reliability targets until the total number of selected targets reaches "n" in an order of a first priority which increases as the simple TTC decreases. That is, the ECU 10 selects the low-reliability targets so that a sum of the number of high-reliability targets that have already been selected and the number of low-reliability targets selected in the order of the first priority becomes "n". Description has been given of the priority processing at the time when the number of high-reliability targets is smaller than "n" in the case in which the own vehicle is moving straight.

After the priority processing is finished, the ECU 10 excludes the non-selected targets. For example, consideration is now given of a case in which, when nine high-speed targets and three low-speed targets exist in the regions RI and Rr, and seven high-speed targets thereamong exist in the specific region Rs, the number of high-reliability targets extracted through the reliability processing is one (<n). In this case, the ECU 10 selects this one high-reliability target, and selects three low-reliability targets from the six low-reliability targets in the specific region Rs in the ascending order of the simple TTC (in the order of the first priority). As a result, the total number of selected targets becomes four. After that, the ECU 10 excludes the remaining eight non-selected targets (three low-reliability targets, two high-speed targets to which the reliability processing has not been applied, and three low-speed targets).

Meanwhile, when the number of high-reliability targets exceeds "n" in the case in which the own vehicle is moving straight, the ECU 10 executes the priority processing of calculating the simple TTC for each of those high-reliability targets, and selecting "n" high-reliability targets in the order of the first priority. After the priority processing is finished, the ECU 10 excludes the non-selected targets. For example, consideration is now given of a case in which, when nine high-speed targets and three low-speed targets exist in the regions RI and Rr, and seven high-speed targets thereamong exist in the specific region Rs, the number of high-reliability targets extracted through the reliability processing is five (>n). In this case, the ECU 10 selects four high-reliability targets from the five high-reliability targets in the order of the first priority. After that, the ECU 10 excludes the remaining eight non-selected targets (one high-reliability target, two low-reliability targets, two high-speed targets to which the reliability processing has not been applied, and three low-speed targets).

In contrast, when the number of high-reliability targets is smaller than "n" in the case in which the own vehicle is turning, the ECU 10 selects all of those high-reliability targets. After that, the ECU 10 selects the remaining low-reliability targets until the total number of selected targets reaches "n" in an order of a second priority which increases as the distance from the own vehicle decreases.

When the distances from the own vehicle to the plurality of low-reliability targets are the same, the number of selected targets may not reach "n" (the plurality of targets having the same distance from the own vehicle is hereinafter also referred to as "same-distance targets"). The low-speed targets include not only pedestrians but also vehicles each moving at low speed. However, when the own vehicle is turning, it is desired that the execution of the collision avoidance assist control for the pedestrians be prioritized over that for the vehicles. Thus, when the number of selected targets does not reach "n" even in the case in which the low-reliability targets are selected in the order of the second priority, the ECU 10 is configured to identify pedestrians from the same-distance targets, and to select the pedestrians preferentially over the vehicles so that the number of selected targets reaches "n". A specific description is now given of this point.

First, the ECU 10 determines whether or not a micro-Doppler condition is satisfied for each of the same-distance targets. The micro-Doppler condition is a condition satisfied when a pedestrian can be identified through micro-Doppler determination. The micro-Doppler determination is well-known determination for identifying a pedestrian, and is executed through use of microwave. That is, the front-and-lateral radar sensors 13L and 13R are configured to be capable of irradiating the microwave in addition to the radio wave in the millimeter wave band. When the micro-Doppler condition is satisfied for a certain target, the ECU 10 selects this target (target identified as a pedestrian) preferentially.

When the number of selected targets does not reach "n" because a plurality of pedestrians are included in the same-distance targets, or because no pedestrians are included therein, for example, the ECU 10 determines whether or not a speed condition is satisfied for each of the same-distance targets. The speed condition is a condition that is satisfied when a target has a speed closest to a reference speed (for example, 5 km/h in the at least one embodiment). The ECU 10 preferentially selects a target satisfying the speed condition.

When the number of selected targets does not reach "n" because a plurality of targets satisfying the speed condition exist in the same-distance targets, the ECU 10 determines whether or not a size condition is satisfied for each of the same-distance targets. The size condition is a condition that is satisfied when the size of any one of a length, a height, and a width is equal to or shorter than 1 m. When the size condition is satisfied for a certain target, the ECU 10 preferentially selects this target. When the number of targets does not reach "n" even through the selection, the ECU 10 excludes targets simultaneously satisfying the size condition, excludes targets simultaneously satisfying the speed condition, and excludes targets simultaneously satisfying the micro-Doppler condition in the stated order until the number of selected targets reaches "n" or less. Description has been given of the priority processing at the time when the number of high-reliability targets is smaller than "n" in the case in which the own vehicle is turning.

After the priority processing is finished, the ECU 10 excludes the non-selected targets. For example, consideration is now given of a case in which, when eleven low-speed targets and five high-speed targets exist in the regions RI and Rr, and nine low-speed targets thereamong exist in the specific region Rt, the number of high-reliability targets extracted through the reliability processing is one (<n). In this case, the ECU 10 selects this one high-reliability target, and selects three low-reliability targets from the eight low-reliability targets in the specific region Rt in the ascending order of the distance (in the order of the second priority). As a result, the total number of selected targets becomes four. When three low-reliability targets cannot be selected even through the selection in the order of the second priority because a plurality of same-distance targets exist in the specific region Rt, the ECU 10 applies the micro-Doppler condition, the speed condition, and the size condition in sequence, to thereby attempt to select three low-reliability targets. After that, the ECU 10 excludes the remaining twelve non-selected targets (five low-reliability targets, two low-speed targets to which the reliability processing has not been applied, and five high-speed targets).

Meanwhile, when the number of high-reliability targets exceeds "n" in the case in which the own vehicle is turning, the ECU 10 selects "n" high-reliability targets in the order of the second priority. When the number of selected targets does not reach "n" even in the case in which the high-reliability targets are selected in the order of second priority, the ECU 10 applies the micro-Doppler condition, the speed condition, and the size condition in sequence, to thereby attempt to select high-reliability targets so that the number of selected targets reaches "n". Description has been given of the priority processing at the time when the number of high-reliability targets exceeds "n" in the case in which the own vehicle is turning.

After the priority processing is finished, the ECU 10 excludes the non-selected targets. For example, consideration is now given of a case in which, when eleven low-speed targets and five high-speed targets exist in the regions RI and Rr, and nine low-speed targets thereamong exist in the specific region Rt, the number of high-reliability targets extracted through the reliability processing is five (>n). In this case, the ECU 10 selects, from those five high-reliability targets, four high-reliability targets in the order of the second priority. Processing in the case in which the number of selected high-reliability targets does not reach four is as described above. After that, the ECU 10 excludes the remaining twelve non-selected targets (one high-reliability target, four low-reliability targets, two low-speed targets to which the reliability processing has not been applied, and five high-speed targets).

### (Additional Selection Processing for High-speed Targets during Turn)

Targets having collision possibility when the own vehicle is turning are mainly low-speed targets existing in the specific region Rt. However, as described above, the own vehicle is liable to collide also with high-speed targets existing in the specific region Rs (although collision possibility of the high-speed targets is lower than that of the low-speed targets). Thus, when the number of low-speed targets in the specific region Rt is smaller than "n", and high-speed targets exist in the specific region Rs, the ECU 10 is configured to be capable of additionally selecting the high-speed targets until the number of selected targets reaches "n".

Specifically, in the above-mentioned case, the ECU 10 applies, to each of the high-speed targets in the specific region Rs, the reliability processing of extracting a high-speed target having a reliability equal to or higher than the reliability threshold value. When the number of extracted high-reliability targets is equal to "a number 'nr' obtained by subtracting the number of low-speed targets in the specific region Rt from 'n'", the ECU 10 selects all of the "nr" high-reliability targets, and excludes the non-selected targets. For example, when the number of low-speed targets in the specific region Rt is one, the number of high-speed targets in the specific region Rs is five, and the number of high-reliability targets among those five high-speed targets is three (=nr), the ECU 10 selects those three high-reliability targets. As a result, the total number of selected targets reaches four. After that, the ECU 10 excludes the remaining two non-selected targets (two low-reliability targets).

Meanwhile, the number of extracted high-reliability targets is smaller than "nr", the ECU 10 selects all of those high-reliability targets. After that, when there exist low-reliability targets (high-speed targets that are not extracted through the reliability processing), the ECU 10 calculates the simple TTC for each of those low-reliability targets, and selects the targets in the order of the first priority so that the total number of selected targets does not exceed "n". After that, the ECU 10 excludes the non-selected targets. For example, when the number of low-speed targets in the specific region Rt is one, the number of high-speed targets in the specific region Rs is five, and the number of high-reliability targets among those five high-speed targets is one (<nr=3), the ECU 10 selects this one high-reliability target. After that, the ECU 10 selects, from the four low-reliability targets, two low-reliability targets in the order of the first priority. As a result, the total number of selected targets reaches four. After that, the ECU 10 excludes the remaining two non-selected targets (two low-reliability targets).

Meanwhile, when the number of extracted high-reliability targets is smaller than "nr", and low-reliability targets do not exist, the ECU 10 selects all of those high-reliability targets, and then excludes the non-selected targets (for example, targets existing outside the specific region Rt).

In contrast, when the number of extracted high-reliability targets exceeds "nr", the ECU 10 calculates the simple TTC for each of those high-reliability targets, and selects "n" high-reliability targets in the order of first priority. After that, the ECU 10 excludes the non-selected targets. For example, when the number of low-speed targets in the specific region Rt is one, the number of high-speed targets in the specific region Rs is five, and the number of high-reliability targets among those five high-speed targets is four (>nr=3), the ECU 10 selects, from the four high-reliability targets, three high-reliability targets in the order of the first priority. As a result, the total number of selected targets reaches four. After that, the ECU 10 excludes the remaining two non-selected targets (one high-reliability target and one low-reliability target).

Description has been given of the target selection processing. The first front target information, the second front target information, and the front-and-lateral target information having the information amount reduced through the target selection processing are fused through the fusion processing. After that, whether or not a collision condition is satisfied is determined for each of the fused targets.

The collision condition includes a warning condition and an automatic braking condition. The warning condition is a condition satisfied when a target exists in a predetermined warning region (that is, the own vehicle is liable to collide with this target) in the case in which the own vehicle is moving straight. The warning region may be set to have the same shape and size of the specific region Rs, or may be set to any region in the specific region Rs. When a fused target exists in the warning region in the case in which the own vehicle is moving straight, the warning condition is satisfied for this target. In this case, the ECU 10 executes, as the collision avoidance assist control, warning control of issuing warning to the driver. Specifically, when the warning condition is satisfied, the ECU 10 transmits a warning command to the ECU 20. When the ECU 20 receives the warning command, the ECU 20 causes the buzzer 21 to emit sound to issue the warning to the driver, to thereby execute the warning control.

Meanwhile, the automatic braking condition is a condition satisfied when the TTC to a target is equal to or shorter than a predetermined TTC threshold value (that is, the own vehicle is liable to collide with this target). A specific description is now given of a method of calculating the TTC. First, the ECU 10 calculates a trajectory of the own vehicle and a trajectory of a target. The trajectory of the own vehicle can be calculated based on a turning radius "r" of the own vehicle. The trajectory of the target can be calculated based on a transition of "the position of the target included in the fused target information". The ECU 10 determines whether or not the own vehicle collides with the target based on those trajectories when the own vehicle moves while maintaining the current moving state, and the target moves while maintaining the current moving state. When the ECU 10 determines that the own vehicle collides with the target, the ECU 10 calculates the TTC for the target. The TTC can be calculated by dividing a distance from the own vehicle "to a point at which the own vehicle is determined to collide with the target" by the vehicle speed.

When the TTC for the fused target is equal to or shorter than the TTC threshold value, the automatic braking condition is satisfied for this target. In this case, the ECU 10 executes, as the collision avoidance assist control, automatic braking control of automatically applying a braking force to the own vehicle. Specifically, when the automatic braking condition is satisfied, the ECU 10 calculates a target deceleration required to stop the own vehicle a predetermined distance before the target, and transmits a braking command being a command including the target deceleration to the ECU 30. When the ECU 30 receives the braking command, the ECU 30 controls the brake actuator 31 so that an actual acceleration matches the target deceleration to generate a friction braking force in each wheel, to thereby execute the automatic braking control.

As described above, the collision condition (in particular, the automatic braking condition) requires a relatively large processing amount for determining whether or not the collision condition is satisfied. Thus, when the number of targets to be determined is large, the processing load increases. However, the apparatus of this embodiment reduces the information amount of the front-and-lateral target information through the target selection processing, and thus there is reduced the processing load at the time when the collision condition is to be determined. Moreover, in the target selection processing, the method of selecting a target is changed between the case in which the own vehicle is moving straight and the case in which the own vehicle is turning. As a result, in any one of the cases, a target having collision possibility can appropriately be selected (in other words, there can greatly be reduced a possibility that a target having collision possibility is excluded or a target having a low collision possibility is selected). Thus, with this configuration, the collision avoidance assist control can appropriately be executed while the information amount of the front-and-lateral target information is reduced.

### (Specific Operation)

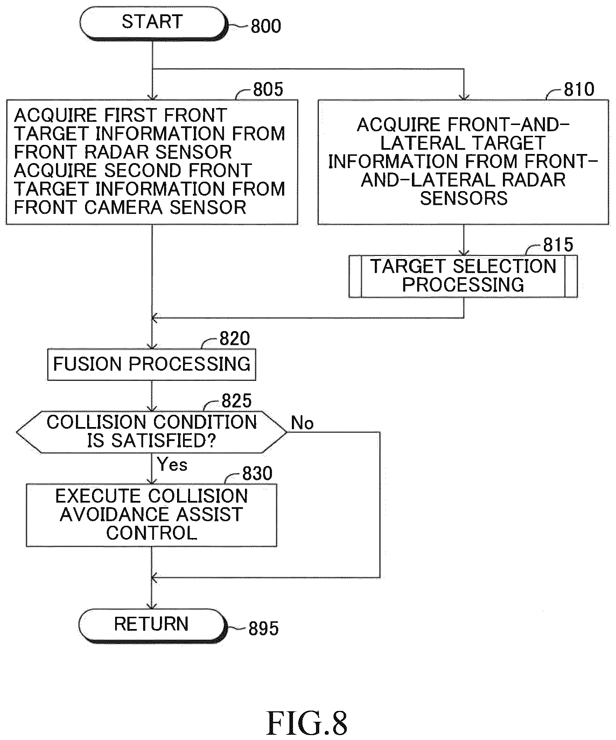

Description is now given of a specific operation of the CPU of the ECU 10. The CPU is configured to execute routines represented as flowcharts of FIG. 8 to FIG. 11 each time a predetermined period elapses during a period in which an ignition switch is at an on position.

At a predetermined timing, the CPU starts processing from Step 800 of FIG. 8, and the process proceeds to Step 805 and Step 810. In Step 805, the CPU acquires the first front target information from the front radar sensor 11, and acquires the second front target information from the front camera sensor 12. After that, the process proceeds to Step 820 (described later). Meanwhile, in Step 810, the CPU acquires the front-and-lateral target information from the front-and-lateral radar sensors 13L and 13R.

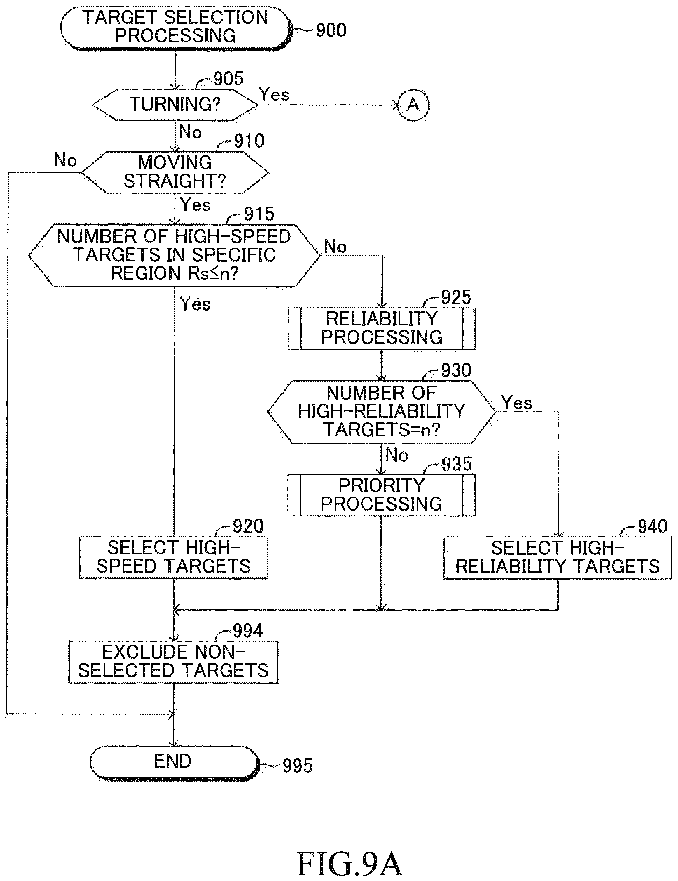

After Step 810, the process proceeds to Step 815, and the CPU executes target selection processing. That is, the CPU starts processing from Step 900 (see FIG. 9A), and the process proceeds to Step 905. In Step 905, the CPU determines whether or not the own vehicle is turning based on the turning radius "r". When the own vehicle is not turning (|r|>r1th), the CPU makes a determination of "No" in Step 905, and the process proceeds to Step 910.

In Step 910, the CPU determines whether or not the own vehicle is moving straight based on the turning radius "r". When the CPU is not moving straight (|r|≤r2th), the CPU makes a determination of "No" in Step 910 (that is, determines that whether the own vehicle is moving straight or is turning cannot be identified), and the process proceeds to Step 820 (see FIG. 8) through Step 995 (described later). In this case, the target selection processing is not executed. Meanwhile, when the own vehicle is moving straight (|r|>r2th), the CPU makes a determination of "Yes" in Step 910, and the process proceeds to Step 915.

In Step 915, the CPU determines whether or not the number of high-speed targets in the specific region Rs is equal to or smaller than the upper limit number "n". "The high-speed target in the specific region Rs" is, in other words, a target that simultaneously satisfies both "a condition satisfied when a target is a high-speed target" and "a condition satisfied when a high-speed target exists in the specific region Rs". When the number of high-speed targets in the specific region Rs is equal to or smaller than "n", the CPU makes a determination of "Yes" in Step 915, and the process proceeds to Step 920. In Step 920, the CPU selects the high-speed targets in the specific region Rs.

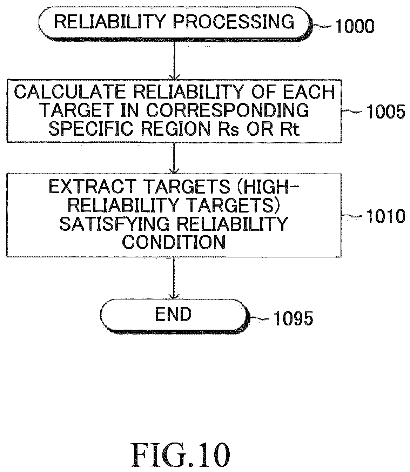

Meanwhile, when the number of high-speed targets in the specific region Rs exceeds "n", the CPU makes a determination of "No" in Step 915, and the process proceeds to Step 925. In Step 925, the CPU executes the reliability processing. When the process proceeds to Step 925, the CPU starts processing from Step 1000 (see FIG. 10), and the process proceeds to Step 1005. In Step 1005, the CPU calculates the reliability of each high-speed target in the specific region Rs. After that, the process proceeds to Step 1010, and the CPU extracts targets (high-reliability targets) satisfying the reliability condition that is satisfied when the reliability is equal to or higher than the reliability threshold value. After that, the CPU temporarily finishes the reliability processing in Step 1095, and the process proceeds to Step 930 (see FIG. 9A).

In Step 930, the CPU determines whether or not the number of high-reliability targets extracted in Step 1010 (see FIG. 10) is equal to "n". When the number of high-reliability targets is equal to "n", the CPU makes a determination of "Yes" in Step 930, and selects "n" high-reliability targets in Step 940.

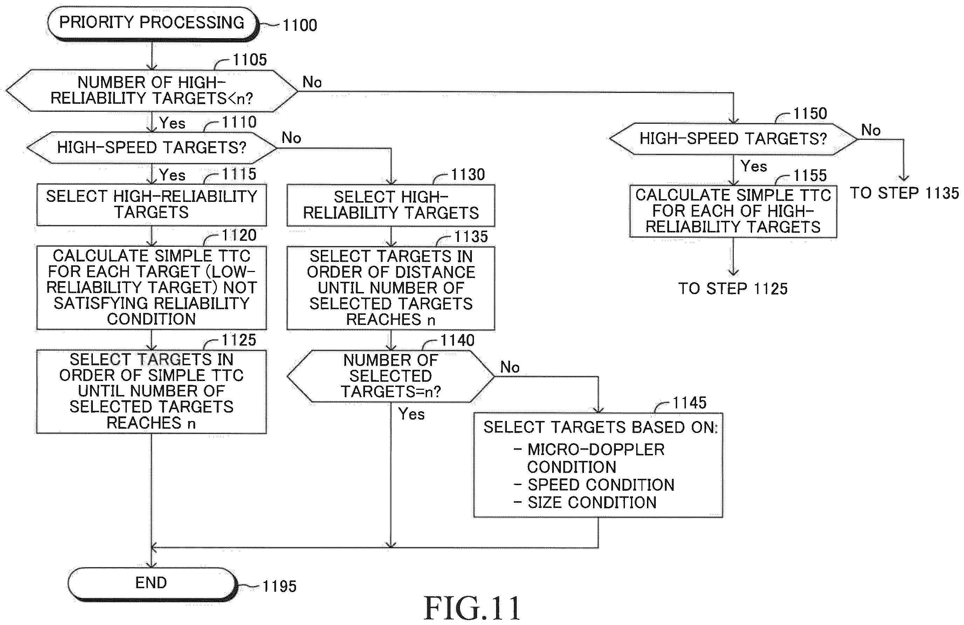

Meanwhile, when the number of high-reliability targets is not "n", the CPU makes a determination of "No" in Step 930, the process proceeds to Step 935. In Step 935, the CPU executes the priority processing. When the process proceeds to Step 935, the CPU starts processing from Step 1100 (see FIG. 11), and the process proceeds to Step 1105. In Step 1105, the CPU determines whether or not the number of high-reliability targets extracted in the reliability processing is smaller than "n". When the number of high-reliability targets is smaller than "n", the CPU makes a determination of "Yes" in Step 1105, and the process proceeds to Step 1110.

In Step 1110, the CPU determines whether or not each of the high-reliability targets is a high-speed target. When the own vehicle is moving straight, the reliability processing is executed for the high-speed targets, and the CPU thus makes a determination of "Yes" in Step 1110. Then, the process proceeds to Step 1115, and the CPU selects those high-reliability targets. After that, the process proceeds to Step 1120, and the CPU calculates the simple TTC for each of the targets (low-reliability targets) that do not satisfy the reliability condition. The process subsequently proceeds to Step 1125, and the CPU selects the low-reliability targets in the ascending order of the simple TTC until the number of selected targets (the sum of the number of high-reliability targets and the number of low-reliability targets) reaches "n". After that, the process proceeds to Step 1195, and the CPU temporarily finishes the priority processing.

In contrast, when the number of high-reliability targets extracted in the reliability processing exceeds "n", the CPU makes a determination of "No" in Step 1105, and the process proceeds to Step 1150. In Step 1150, the CPU determines whether or not each of the high-reliability targets is a high-speed target. When the own vehicle is moving straight, the CPU makes a determination of "Yes" in Step 1150, and the process proceeds to Step 1155.

In Step 1155, the CPU calculates the simple TTC for each of the high-reliability targets the number of which exceeds "n". The process subsequently proceeds to Step 1125, and the CPU selects the high-reliability targets in the ascending order of the simple TTC until the number of selected targets reaches "n". After that, the process proceeds to Step 1195, and the CPU temporarily finishes the priority processing.

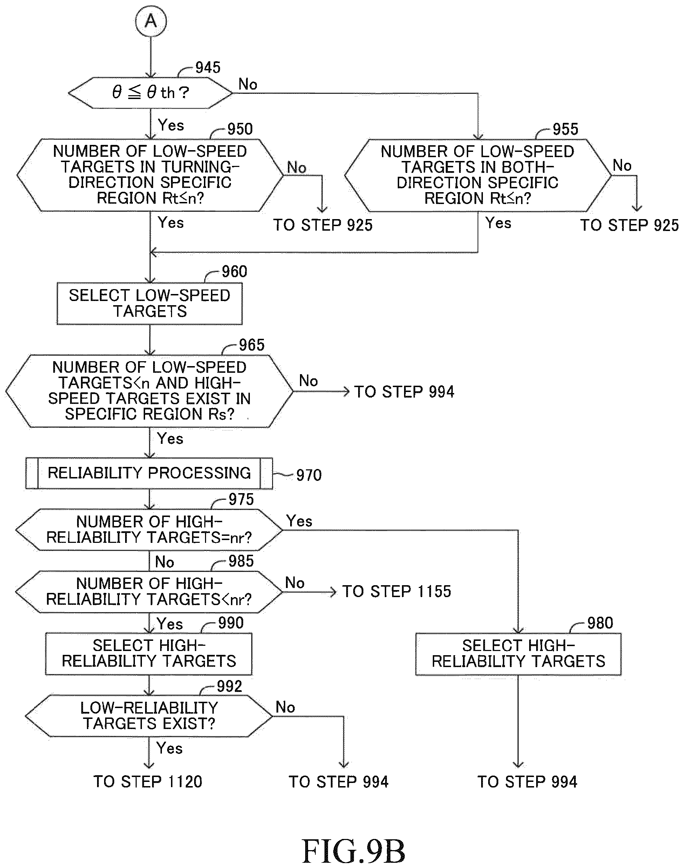

Meanwhile, when the own vehicle is turning (|r|≤r1th), the CPU makes a determination of "Yes" in Step 905 (see FIG. 9A), and the process proceeds to Step 945 of FIG. 9B. In Step 945, the CPU determines whether or not the turning angle θ is equal to or smaller than the angle threshold value θth. When the relationship of "θ≤θth" is satisfied (the degree of turn is relatively small), the CPU makes a determination of "Yes" in Step 945, and the process proceeds to Step 950.

In Step 950, the CPU determines whether or not the number of low-speed targets in the turning-direction specific region Rt is equal to or smaller than "n". "The low-speed target in the turning-direction specific region Rt" is, in other words, a target that simultaneously satisfies both "a condition satisfied when a target is a low-speed target" and "a condition satisfied when a low-speed target exists in the turning-direction specific region Rt". When the number of low-speed targets in the turning-direction specific region Rt is equal to or smaller than "n", the CPU makes a determination of "Yes" in Step 950, and the process proceeds to Step 960.

In Step 960, the CPU selects low-speed targets in the turning-direction specific region Rt, and the process proceeds to Step 965. In Step 965, the CPU determines whether or not there is satisfied the condition that the number of low-speed targets selected in Step 960 is smaller than "n", and high-speed targets exist in the specific region Rs. When this condition is not satisfied (that is, the number of low-speed targets is equal to "n", or high-speed targets do not exist in the specific region Rs), the CPU makes a determination of "No" in Step 965, and the process proceeds to Step 994 (see FIG. 9A) (described later). Meanwhile, when this condition is satisfied, the CPU makes a determination of "Yes" in Step 965, the process proceeds to Step 970, and the CPU executes the reliability processing.

When the process proceeds to Step 970, the CPU starts processing from Step 1000 (see FIG. 10), and the process proceeds to Step 1005. In Step 1005, the CPU calculates the reliability of each high-speed target in the specific region Rs. After that, the process proceeds to Step 1010, and the CPU extracts high-reliability targets satisfying the reliability condition. After that, the CPU temporarily finishes the reliability processing in Step 1095, and the process proceeds to Step 975 (see FIG. 9B).

In Step 975, the CPU determines whether or not the number of high-reliability targets extracted in Step 1010 (see FIG. 10) is equal to "nr" (number obtained by subtracting the number of low-speed targets selected in Step 960 from "n"). When the number of high-reliability targets is equal to "nr", the CPU makes a determination of "Yes" in Step 975, and selects "nr" high-reliability targets in Step 980.

Meanwhile, the number of high-reliability targets is not "nr", the CPU makes a determination of "No" in Step 975, the process proceeds to Step 985, and the CPU determines whether or not the number of high-reliability targets is smaller than "nr". When the number of high-reliability targets is larger than "nr", the CPU makes a determination of "No" in Step 985, and the process proceeds to Step 1155 (see FIG. 11).

In Step 1155, the CPU calculates the simple TTC for each of the high-reliability targets the number of which is larger than "nr". The process subsequently proceeds to Step 1125, and the CPU selects the high-reliability targets in the ascending order of the simple TTC until the number of selected targets (the sum of the number of low-speed targets and the number of high-reliability targets (high-speed targets)) reaches "n". After that, the process proceeds to Step 1195, and the CPU temporarily finishes the priority processing.

Meanwhile, when the number of high-reliability targets is smaller than "nr", the CPU makes a determination of "Yes" in Step 985, and selects, in Step 990, all of the high-reliability targets extracted through the reliability processing. Subsequently, the process proceeds to Step 992, and the CPU determines whether or not there exist low-reliability targets that do not satisfy the reliability condition in the high-speed targets in the specific region Rs. When there do not exist low-reliability targets, the CPU makes a determination of "No" in Step 992.

Meanwhile, when there exist low-reliability targets, the CPU makes a determination of "Yes" in Step 992, the process proceeds to Step 1120 (see FIG. 11), and the CPU calculates the simple TTC for each of the low-reliability targets. The process subsequently proceeds to Step 1125, and the CPU selects the low-reliability targets in the ascending order of the simple TTC until the number of selected targets (the sum of the number of low-speed targets, the number of high-reliability targets (high-speed targets), and the number of low-reliability targets (high-speed targets)) reaches "n". After that, the process proceeds to Step 1195, and temporarily finishes the priority processing.

In contrast, when the number of low-speed targets in the turning-direction specific region Rt exceeds "n", the CPU makes a determination of "No" in Step 950, and starts the reliability processing from Step 1000 (see FIG. 10) through Step 925 (FIG. 9A). Then, the process proceeds to Step 1005. The CPU calculates the reliability of each of the low-speed targets in the turning-direction specific region Rt in Step 1005, and the process proceeds to Step 1010. In Step 1010, the CPU extracts high-reliability targets satisfying the reliability condition, and the process proceeds to Step 930 (see FIG. 9A) through Step 1095.

In Step 930, the CPU determines whether or not the number of high-reliability targets extracted in Step 1010 (see FIG. 10) is equal to "n". When the number of high-reliability targets is equal to "n", the CPU makes a determination of "Yes" in Step 930, and selects "n" high-reliability targets in Step 940.

Meanwhile, when the number of high-reliability targets is not "n", the CPU makes the determination of "No" in Step 930, and starts the priority processing from Step 1100 (see FIG. 11) through Step 935. Then, the process proceeds to Step 1105. In Step 1005, the CPU determines whether or not the number of high-reliability targets extracted in the reliability processing is smaller than "n", and makes the determination of "Yes" in Step 1105 when the number is smaller than "n". In Step 1110, the CPU determines whether or not the high-reliability targets are high-speed targets.

When the own vehicle is turning, the reliability processing is executed for the low-speed targets, and the CPU thus makes a determination of "No" in Step 1110. Then, the process proceeds to Step 1130, and the CPU selects those high-reliability targets. The process subsequently proceeds to Step 1135, and the CPU obtains the distance from the own vehicle for each of the low-reliability targets based on the front-and-lateral target information. Then, the CPU selects the low-reliability targets in an order of the distance until the number of selected targets (the sum of the number of high-reliability targets and the number of low-reliability targets) reaches "n".

After that, the process proceeds to Step 1140, and the CPU determines whether or not the number of selected targets is equal to "n". When the number of selected targets is equal to "n", the CPU makes a determination of "Yes" in Step 1140. Then, the process proceeds to Step 1195, and the CPU temporarily finishes the priority processing.

Meanwhile, when the number of selected targets does not reach "n" due to the state in which there exists a plurality of same-distance targets, the CPU makes a determination of "No" in Step 1140. Then, the process proceeds to Step 1145, and the CPU sequentially applies the micro-Doppler condition, the speed condition, and the size condition until the number of selected targets reaches "n". After that, the process proceeds to Step 1195, and the CPU temporarily finishes the priority processing.

In contrast, when the number of high-reliability targets extracted in the reliability processing exceeds "n", the CPU makes a determination of "No" in Step 1105. In Step 1150, the CPU determines whether or not each of the high-reliability targets is a high-speed target. When the own vehicle is turning, the CPU makes a determination of "No" in Step 1150, and the process proceeds to Step 1135.

In Step 1135, the CPU acquires the distance from the own vehicle for each of the high-reliability targets the number of which exceeds "n", and selects the high-reliability targets in the order of the distance until the number of selected targets reaches "n". The process subsequently proceeds to Step 1140, the CPU determines whether or not the number of selected targets is equal to "n". When the number of selected targets is equal to "n", the CPU makes the determination of "Yes" in Step 1140, the process proceeds to Step 1195, and the CPU temporarily finishes the priority processing. Meanwhile, when the number of selected targets is not equal to "n", the CPU makes the determination of "No" in Step 1140, and the process proceeds to Step 1145. The processing of Step 1145 is as described above.

In contrast, when the relationship of "θ>θth" is satisfied (the degree of turn is relatively large), the CPU makes a determination of "No" in Step 945, and the process proceeds to Step 955. In Step 955, the CPU determines whether or not the number of low-speed targets in the both-direction specific region Rt is equal to or smaller than "n". "The low-speed target in the both-direction specific region Rt" is, in other words, a target that simultaneously satisfies both "a condition satisfied when a target is a low-speed target" and "a condition satisfied when a low-speed target exists in the both-direction specific region Rt". When the number of low-speed targets in the both-direction specific region Rt is equal to or smaller than "n", the CPU makes a determination of "Yes" in Step 955, and the process proceeds to Step 960. Processing subsequent to Step 960 is as described above.

Meanwhile, when the number of low-speed targets in the both-direction specific region Rt exceeds "n", the CPU makes a determination of "No" in Step 955, and the process proceeds to Step 925 (see FIG. 9A). Processing subsequent to Step 925 is as described above.

After Step 920, Step 940, or Step 980, after the CPU makes the determination of "No" in Step 965 or Step 992, or after the priority processing in Step 1195, the process proceeds to Step 994 (see FIG. 9A), and the CPU excludes the non-selected targets. After that, the process proceeds to Step 995, the CPU temporarily finishes this routine (target selection processing), and the process proceeds to Step 820 (see FIG. 8).

In Step 820, the CPU executes the fusion processing of fusing the first front target information, the second front target information, and the front-and-lateral target information having the information amount reduced through the target selection processing. Subsequently, the process proceeds to Step 825, and the CPU determines whether or not the collision condition (warning condition and/or automatic braking condition) is satisfied for each of the fused targets. When the collision condition is not satisfied, the CPU makes a determination of "No" (that is, determines that there is no targets having collision possibility) in Step 825. Then, the process proceeds to Step 895, and the CPU temporarily finishes this routine.

Meanwhile, when the collision condition is satisfied, the CPU makes a determination of "Yes" in Step 825, and the process proceeds to Step 830. In Step 830, when the warning condition of the collision condition is satisfied, the warning control is executed as the collision avoidance assist control. When the automatic braking condition of the collision condition is satisfied, the automatic braking control is executed as the collision avoidance assist control. After that, the process proceeds to Step 895, and the CPU temporarily finishes this routine.

In the above, the collision avoidance assist apparatus according to the at least one embodiment and the modification examples has been described, but the present invention is not limited to the above-mentioned at least one embodiment and modification examples. Various changes are possible within the scope of the invention as defined by the appended claims.

For example, the ECU 10 may be configured to determine that the own vehicle is moving straight when the own vehicle is not turning. In this case, "the case in which the own vehicle is not turning" corresponds to an example of "the first case".

Moreover, the front-and-lateral target information may be acquired by front-and-lateral cameras in place of, or in addition to, the front-and-lateral radar sensors 13L and 13R.

Further, as the collision avoidance assist control, automatic steering control may be executed in addition to the warning control and the automatic braking control. The automatic steering control is well-known control of automatically changing a steered angle of the steered wheels of the own vehicle when the collision condition is satisfied. The warning control may be configured such that the warning control is executed also when the warning condition is satisfied in the case in which the own vehicle is turning.

Further, the reliability processing and/or the priority processing is not always required to be executed. Specifically, when the own vehicle is moving straight, there may be selected targets that satisfy a condition that is satisfied when a target is a high-speed target, and exists in the specific region Rs (that is, the non-selected targets are excluded). Moreover, when the own vehicle is turning, there may be selected targets that satisfy a condition that is satisfied when a target is a low-speed target, and exists in the specific region Rt (that is, non-selected targets are excluded). Also with this configuration, the information amount of the front-and-lateral target information can appropriately be reduced.

Further, in addition to the above-mentioned configuration, it is not always required to set the specific region Rs and the specific region Rt. Specifically, when the own vehicle is moving straight, there may be selected targets that satisfy a condition that is satisfied when a target is a high-speed target. Moreover, when the own vehicle is turning, there may be selected targets that satisfy a condition that is satisfied when a target is a low-speed target. Also with this configuration, the information amount of the front-and-lateral target information can appropriately be reduced.

Further, the at least one embodiment is configured such that, when the own vehicle is turning, at most the upper limit number "n" of low-speed targets existing in the specific region Rt are selected, and, only when the number of low-speed targets is smaller than "n", at most "nr" high-speed targets existing in the specific region Rs can be additionally selected (hereinafter referred to as "configuration 1"). However, the following configuration may be provided. That is, when the own vehicle is turning, there may be selected an upper limit number n1 (for example, 3) of low-speed targets existing in the specific region Rt, and there may be selected an upper limit number n2 (n2=n-n1, for example, 1) of high-speed targets existing in the specific region Rs (hereinafter referred to as "configuration 2"). With the configuration 2, even when "n" or more low-speed targets exist in the specific region Rt, it is possible to reliably select at most n2 high-speed targets existing in the specific region Rs. Thus, the collision avoidance assist control can also be appropriately executed for such high-speed targets. Further, the configuration 1 and the configuration 2 may be switched by the driver.

## Claims

1. A collision avoidance assist apparatus, comprising:
a front target information acquisition device (11,12) configured to detect a target that exists in a predetermined front region (Rf) including at least a front side of an own vehicle (V), and to acquire, as front target information, information on the detected target;
a front-and-lateral target information acquisition device (13L, 13R) configured to detect a target that exists in a predetermined front-and-lateral region (Rs, Rt) including at least a diagonally front side and a lateral side of the own vehicle (V), and to acquire, as front-and-lateral target information, information on the detected target;
a vehicle information acquisition device (14, 15, 16) configured to acquire vehicle information including a speed of the own vehicle (V) and at least one of a yaw rate of the own vehicle or a steering input value being an input value which is based on steering operation of the own vehicle (V); and
a control unit (10) configured to execute, as collision avoidance assist control, at least one of warning control of issuing a warning to a driver of the own vehicle (V) and automatic braking control of automatically applying a braking force to the own vehicle (V), when a target satisfies a collision condition that is satisfied when it is determined that the own vehicle (V) is liable to collide with the target based on the front target information and the front-and-lateral target information,
wherein the control unit (10) is configured to select, from among targets included in the front-and-lateral target information, targets that satisfy a predetermined selection condition, and to determine whether each of the selected targets satisfies the collision condition, and
**characterized in that**, when determining whether each of the selected targets satisfies the collision condition, the control unit (10) is configured to determine whether the own vehicle (V) is turning based on the vehicle information, and to change the selection condition between a case in which the own vehicle (V) is not turning and a case in which the own vehicle is turning.

2. The collision avoidance assist apparatus according to claim 1, wherein the control unit (10) is configured to:
further determine whether the own vehicle (V) is moving straight when the own vehicle is determined not to be turning;
include, in a first case in which the own vehicle (V) is moving straight, as the selection condition, a condition that is satisfied when a target is a first target (40) that has a speed in a predetermined first speed range; and
include, in a second case in which the own vehicle (V) is turning, as the selection condition, a condition that is satisfied when a target is a second target (50, 60, 61) that has a speed in a predetermined second speed range that has a lower limit value smaller than a lower limit value of the first speed range and has an upper limit value smaller than an upper limit value of the first speed range.

3. The collision avoidance assist apparatus according to claim 2, wherein the control unit (10) is configured to:
include, in the first case, as the selection condition, a condition that is satisfied when the first target (40) exists in a predetermined first specific region (Rs) which is included in the front-and-lateral region; and
include, in the second case, as the selection condition, a condition that is satisfied when the second target (50, 60, 61) exists in a predetermined second specific region (Rt) which is included in the front-and-lateral region and is narrower than the first specific region (Rs).

4. The collision avoidance assist apparatus according to claim 3,
wherein the vehicle information acquisition device (16) is configured to acquire the steering input value, and
wherein the control unit (10) is, in the second case, configured to:
calculate, based on the steering input value, a turning angle (θ) by which the own vehicle (V) has turned from a point in time when the own vehicle starts turning to a current point in time;
set, as the second specific region (Rt), a region including a left region (Rtl) and a right region (Rtr), the left region (Rtl) including at least a left diagonally front side and a left lateral side of the own vehicle and the right region (Rtr) including at least a right diagonally front side and a right lateral side of the own vehicle, when the turning angle (θ) exceeds a predetermined angle threshold value (θth); and
set, as the second specific region (Rt), one of the left region (Rtl) and the right region (Rtr) that is on a turning direction side of the own vehicle, when the turning angle (θ) is equal to or smaller than the angle threshold value (θth).

5. The collision avoidance assist apparatus according to any one of claims 2 to 4,
wherein when the number of targets that satisfy the selection condition exceeds a predetermined upper limit number (n) in each of the first case and the second case, the control unit (10) is configured to determine whether each target is continuously detected based on the front-and-lateral target information, and to calculate a reliability of each target based on a result of the determination, and
wherein the control unit (10) is configured to add, as the selection condition, a reliability condition that is satisfied when a target is a high-reliability target that has a reliability equal to or higher than a predetermined reliability threshold value.

6. The collision avoidance assist apparatus according to claim 5,
wherein the control unit (10) is configured to select targets the number of which is equal to or smaller than the upper limit number (n) from among the targets included in the front-and-lateral target information,
wherein, in the first case, when the number of high-reliability targets exceeds the upper limit number (n), the control unit (10) is configured to calculate, for each of the high-reliability targets, a simple time to collision defined by a distance to the own vehicle and a speed of the corresponding high-reliability target, and to select the upper limit number (n) of the high-reliability targets in an order of a first priority which increases as the simple time to collision decreases, and
wherein, in the second case, when the number of high-reliability targets exceeds the upper limit number (n), the control unit (10) is configured to select the upper limit number (n) of the high-reliability targets in an order of a second priority which increases as the distance decreases.

7. The collision avoidance assist apparatus according to claim 5 or 6,
wherein the control unit (10) is configured to select targets the number of which is equal to or smaller than the upper limit number (n) from among the targets included in the front-and-lateral target information,
wherein, in the first case, when the number of high-reliability targets is smaller than the upper limit number (n), the control unit (10) is configured to calculate, for each of low-reliability targets which do not satisfy the reliability condition, a simple time to collision defined by a distance to the own vehicle and a speed of the corresponding low-reliability target, and to select the low-reliability targets in an order of a first priority which increases as the simple time to collision decreases such that a sum of the number of the high-reliability targets and the number of the low-reliability targets matches the upper limit number (n), and
wherein, in the second case, when the number of high-reliability targets is smaller than the upper limit number (n), the control unit (10) is configured to select the low-reliability targets in an order of a second priority which increases as the distance decreases such that a sum of the number of the high-reliability targets and the number of the low-reliability targets matches the upper limit number (n).

8. The collision avoidance assist apparatus according to claim 2, wherein, in the second case, the control unit (10) is configured to include, as the selection condition, in addition to the condition that is satisfied when a target is the second target, a condition of selecting a predetermined number, which is smaller than the upper limit number (n), of the first targets (53, 62) that exist in a predetermined first specific region (Rs) which is included in the front-and-lateral region.

## Patentansprüche

1. Vorrichtung zur Kollisionsvermeidungsunterstützung, umfassend:
eine vordere Zielinformation-Erfassungsvorrichtung (11, 12), die konfiguriert ist, um ein Ziel zu erkennen, das in einer vorbestimmten vorderen Region (Rf) vorhanden ist, die mindestens eine Vorderseite eines eigenen Fahrzeugs (V) umfasst, und um als vordere Zielinformationen Informationen über das erkannte Ziel zu erfassen;
eine vordere und seitliche Zielinformation-Erfassungsvorrichtung (13L, 13R), die konfiguriert ist, um ein Ziel zu erkennen, das in einer vorbestimmten vorderen und seitlichen Region (Rs, Rt) vorhanden ist, die mindestens eine diagonale Vorderseite und eine seitliche Seite des eigenen Fahrzeugs (V) beinhaltet, und um als vordere und seitliche Zielinformationen Informationen über das erkannte Ziel zu erfassen;
eine Fahrzeuginformation-Erfassungsvorrichtung (14, 15, 16), die konfiguriert ist, um Fahrzeuginformationen zu erfassen, die eine Geschwindigkeit des eigenen Fahrzeugs (V) und mindestens eines von einer Gierrate des eigenen Fahrzeugs oder einem Lenkeingabewert, der ein Eingabewert ist, der auf einem Lenkvorgang des eigenen Fahrzeugs (V) basiert, beinhalten; und
eine Steuereinheit (10), die konfiguriert ist, um als Steuerung zur Kollisionsvermeidungsunterstützung mindestens eine von einer Warnsteuerung eines Ausgebens einer Warnung an einen Fahrer des eigenen Fahrzeugs (V) und/oder einer automatischen Bremssteuerung zum automatischen Anwenden einer Bremskraft auf das eigene Fahrzeug (V) auszuführen, wenn ein Ziel eine Kollisionsbedingung erfüllt, die erfüllt ist, wenn basierend auf den vorderen Zielinformationen und den vorderen und seitlichen Zielinformationen bestimmt wird, dass das eigene Fahrzeug (V) mit dem Ziel kollidieren könnte,
wobei die Steuereinheit (10) konfiguriert ist, um aus den in den vorderen und seitlichen Zielinformationen beinhalteten Zielen Ziele auszuwählen, die eine vorbestimmte Auswahlbedingung erfüllen, und zu bestimmen, ob jedes der ausgewählten Ziele die Kollisionsbedingung erfüllt, und
**dadurch gekennzeichnet, dass**, wenn bestimmt wird, ob jedes der ausgewählten Ziele die Kollisionsbedingung erfüllt, die Steuereinheit (10) konfiguriert ist, um basierend auf den Fahrzeuginformationen zu bestimmen, ob das eigene Fahrzeug (V) abbiegt, und um die Auswahlbedingung zwischen einem Fall, in dem das eigene Fahrzeug (V) nicht abbiegt, und einem Fall, in dem das eigene Fahrzeug abbiegt, zu ändern.

2. Vorrichtung zur Kollisionsvermeidungsunterstützung nach Anspruch 1, wobei die Steuereinheit (10) zu Folgendem konfiguriert ist:
ferner Bestimmen, ob das eigene Fahrzeug (V) geradeaus fährt, wenn bestimmt wird, dass das eigene Fahrzeug nicht abbiegt;
Beinhalten, in einem ersten Fall, in dem das eigene Fahrzeug (V) geradeaus fährt, als Auswahlbedingung einer Bedingung, die erfüllt ist, wenn ein Ziel ein erstes Ziel (40) ist, das eine Geschwindigkeit in einem vorbestimmten ersten Geschwindigkeitsbereich aufweist; und
Beinhalten, in einem zweiten Fall, in dem das eigene Fahrzeug (V) abbiegt, als Auswahlbedingung einer Bedingung, die erfüllt ist, wenn ein Ziel ein zweites Ziel (50, 60, 61) ist, das eine Geschwindigkeit in einem vorbestimmten zweiten Geschwindigkeitsbereich aufweist, der einen unteren Grenzwert aufweist, der kleiner ist als ein unterer Grenzwert des ersten Geschwindigkeitsbereichs, und einen oberen Grenzwert aufweist, der kleiner ist als ein oberer Grenzwert des ersten Geschwindigkeitsbereichs.

3. Vorrichtung zur Kollisionsvermeidungsunterstützung nach Anspruch 2, wobei die Steuereinheit (10) zu Folgendem konfiguriert ist:
Beinhalten, in dem ersten Fall als Auswahlbedingung einer Bedingung, die erfüllt ist, wenn das erste Ziel (40) in einer vorbestimmten ersten spezifischen Region (Rs) vorhanden ist, die in der vorderen und seitlichen Region beinhaltet ist; und
Beinhalten, in dem zweiten Fall, als Auswahlbedingung einer Bedingung, die erfüllt ist, wenn das zweite Ziel (50, 60, 61) in einer vorbestimmten zweiten spezifischen Region (Rt) vorhanden ist, die in der vorderen und seitlichen Region beinhaltet ist und schmaler ist als die erste spezifische Region (Rs).

4. Vorrichtung zur Kollisionsvermeidungsunterstützung nach Anspruch 3,
wobei die Fahrzeuginformation-Erfassungsvorrichtung (16) konfiguriert ist, um den Lenkeingabewert zu erfassen, und
wobei die Steuereinheit (10) in dem zweiten Fall zu Folgendem konfiguriert ist:
basierend auf dem Lenkeingangswert, Berechnen eines Abbiegewinkels (θ), um den sich das eigene Fahrzeug (V) von einem Zeitpunkt, an dem das eigene Fahrzeug zu wenden beginnt, bis zu einem aktuellen Zeitpunkt gedreht hat;
Festlegen, als die zweite spezifische Region (Rt), einer Region, die eine linke Region (Rtl) und eine rechte Region (Rtr) beinhaltet, wobei die linke Region (Rtl) mindestens eine linke diagonale Vorderseite und eine linke seitliche Seite des eigenen Fahrzeugs beinhaltet und die rechte Region (Rtr) mindestens eine rechte diagonale Vorderseite und eine rechte seitliche Seite des eigenen Fahrzeugs beinhaltet, wenn der Abbiegewinkel (θ) einen vorgegebenen Winkelschwellenwert (θth) überschreitet; und
Festlegen, als die zweite spezifische Region (Rt), einer von der linken Region (Rtl) und der rechten Region (Rtr), die sich auf einer Abbiegerichtungsseite des eigenen Fahrzeugs ist, wenn der Abbiegewinkel (θ) gleich wie oder kleiner als der Winkelschwellenwert (θth) ist.

5. Vorrichtung zur Kollisionsvermeidungsunterstützung nach einem der Ansprüche 2 bis 4,
wobei, wenn die Anzahl von Zielen, die die Auswahlbedingung erfüllen, sowohl in dem ersten Fall als auch in dem zweiten Fall eine vorbestimmte obere Grenzzahl (n) überschreitet, die Steuereinheit (10) konfiguriert ist, um basierend auf den vorderen und seitlichen Zielinformationen zu bestimmen, ob jedes Ziel kontinuierlich erkannt wird, und um basierend auf einem Resultat der Bestimmung eine Zuverlässigkeit von jedem Ziels zu berechnen, und
wobei die Steuereinheit (10) konfiguriert ist, um als Auswahlbedingung eine Zuverlässigkeitsbedingung hinzuzufügen, die erfüllt ist, wenn ein Ziel ein hochzuverlässiges Ziel ist, das eine Zuverlässigkeit aufweist, die gleich wie oder höher als ein vorbestimmter Zuverlässigkeitsschwellenwert ist.

6. Vorrichtung zur Kollisionsvermeidungsunterstützung nach Anspruch 5,
wobei die Steuereinheit (10) konfiguriert ist, um unter den in den vorderen und seitlichen Zielinformationen beinhalteten Zielen Ziele auszuwählen, deren Anzahl gleich wie oder kleiner als die obere Grenzzahl (n) ist,
wobei, wenn die Anzahl der hochzuverlässigen Ziele die obere Grenzzahl (n) überschreitet, die Steuereinheit (10) in dem ersten Fall konfiguriert ist, um für jedes der hochzuverlässigen Ziele eine einfache Zeit bis zur Kollision zu berechnen, die durch einen Abstand zu dem eigenen Fahrzeug und eine Geschwindigkeit des entsprechenden hochzuverlässigen Ziels definiert ist, und um die obere Grenzzahl (n) der hochzuverlässigen Ziele in einer Reihenfolge einer ersten Priorität auszuwählen, die zunimmt, wenn die einfache Zeit bis zur Kollision abnimmt, und
wobei, wenn die Anzahl der hochzuverlässigen Ziele die obere Grenzzahl (n) überschreitet, die Steuereinheit (10) in dem zweiten Fall konfiguriert ist, um die obere Grenzzahl (n) der hochzuverlässigen Ziele in einer Reihenfolge einer zweiten Priorität auszuwählen, die mit abnehmendem Abstand zunimmt.

7. Vorrichtung zur Kollisionsvermeidungsunterstützung nach Anspruch 5 oder 6,
wobei die Steuereinheit (10) konfiguriert ist, um unter den in den vorderen und seitlichen Zielinformationen beinhalteten Zielen Ziele auszuwählen, deren Anzahl gleich wie oder kleiner als die obere Grenzzahl (n) ist,
wobei, wenn die Anzahl der hochzuverlässigen Ziele kleiner ist als die obere Grenzzahl (n), die Steuereinheit (10) in dem ersten Fall konfiguriert ist, um für jedes der geringzuverlässigen Ziele, die die Zuverlässigkeitsbedingung nicht erfüllen, eine einfache Zeit bis zur Kollision zu berechnen, die durch einen Abstand zu dem eigenen Fahrzeug und eine Geschwindigkeit des entsprechenden geringzuverlässigen Ziels definiert ist, und die geringzuverlässigen Ziele in einer Reihenfolge einer ersten Priorität auszuwählen, die zunimmt, wenn die einfache Zeit bis zur Kollision abnimmt, sodass eine Summe der Anzahl der hochzuverlässigen Ziele und der Anzahl der geringzuverlässigen Ziele der oberen Grenzzahl (n) entspricht, und
wobei, wenn die Anzahl der hochzuverlässigen Ziele kleiner ist als die obere Grenzzahl (n), die Steuereinheit (10) in dem zweiten Fall konfiguriert ist, um die geringzuverlässigen Ziele in einer Reihenfolge einer zweiten Priorität auszuwählen, die mit abnehmendem Abstand zunimmt, sodass eine Summe der Anzahl der hochzuverlässigen Ziele und der Anzahl der geringzuverlässigen Ziele der oberen Grenzzahl (n) entspricht.

8. Vorrichtung zur Kollisionsvermeidungsunterstützung nach Anspruch 2, wobei die Steuereinheit (10) in dem zweiten Fall konfiguriert ist, um als Auswahlbedingung zusätzlich zu der Bedingung, die erfüllt ist, wenn ein Ziel das zweite Ziel ist, eine Bedingung der Auswahl einer vorbestimmten Anzahl, die kleiner ist als die obere Grenzanzahl (n), der ersten Ziele (53, 62) zu beinhalten, die in einer vorbestimmten ersten spezifischen Region (Rs) vorhanden sind, die in der vorderen und seitlichen Region beinhaltet ist.

## Revendications

1. Appareil d'assistance d'évitement de collision, comprenant :
un dispositif d'acquisition d'information de cible avant (11, 12) configuré pour détecter une cible qui existe dans une zone avant prédéterminée (Rf) incluant au moins un côté avant d'un propre véhicule (V), et pour acquérir, en tant qu'information de cible avant, de l'information sur la cible détectée ;
un dispositif d'acquisition d'information de cible avant et latérale (13L, 13R) configuré pour détecter une cible qui existe dans une zone avant et latérale prédéterminée (Rs, Rt) incluant au moins un côté avant en diagonale et un côté latéral du propre véhicule (V), et pour acquérir, en tant qu'information de cible avant et latérale, de l'information sur la cible détectée ;
un dispositif d'acquisition d'information de véhicule (14, 15, 16) configuré pour acquérir de l'information de véhicule comprenant une vitesse du propre véhicule (V) et au moins un d'un taux de lacet du propre véhicule ou d'une valeur d'entrée de direction qui est une valeur d'entrée qui est basée sur une opération de direction du propre véhicule (V) ; et
une unité de commande (10) configurée pour exécuter, en tant que commande d'assistance d'évitement de collision, au moins une d'une commande d'avertissement destinée à délivrer un avertissement à un conducteur du propre véhicule (V) et d'une commande de freinage automatique destinée à appliquer automatiquement une force de freinage sur le propre véhicule (V), quand une cible satisfait une condition de collision qui est satisfaite lorsque l'on détermine que le propre véhicule (V) est susceptible d'entrer en collision avec la cible sur la base de l'information de cible avant et de l'information de cible avant et latérale,
dans lequel l'unité de commande (10) est configurée pour sélectionner, parmi des cibles incluses dans l'information de cible avant et latérale, des cibles qui remplissent une condition de sélection prédéterminée, et pour déterminer si chacune des cibles sélectionnées satisfait la condition de collision, et
**caractérisé en ce que**, lorsque l'on détermine si chacune des cibles sélectionnées satisfait la condition de collision, l'unité de commande (10) est configurée pour déterminer si le propre véhicule (V) est en virage sur la base de l'information de véhicule, et pour changer la condition de sélection entre un cas dans lequel le propre véhicule (V) n'est pas en virage et un cas dans lequel le propre véhicule est en virage.

2. Appareil d'assistance d'évitement de collision selon la revendication 1, dans lequel l'unité de commande (10) est configurée pour :
déterminer en outre si le propre véhicule (V) se déplace en ligne droite quand le propre véhicule est déterminé comme n'étant pas en virage ;
inclure, dans un premier cas dans lequel le propre véhicule (V) se déplace en ligne droite, comme condition de sélection, une condition qui est satisfaite quand une cible est une première cible (40) qui a une vitesse dans une première plage de vitesse prédéterminée ; et
inclure, dans un deuxième cas dans lequel le propre véhicule (V) est en virage, comme condition de sélection, une condition qui est satisfaite quand une cible est une deuxième cible (50, 60, 61) qui a une vitesse dans une deuxième plage de vitesse prédéterminée qui a une valeur de limite inférieure plus petite qu'une valeur de limite inférieure de la première plage de vitesse et a une valeur de limite supérieure plus petite qu'une valeur de limite supérieure de la première plage de vitesse.

3. Appareil d'assistance d'évitement de collision selon la revendication 2, dans lequel l'unité de commande (10) est configurée pour :
inclure, dans le premier cas, comme condition de sélection, une condition qui est satisfaite quand la première cible (40) existe dans une première zone spécifique prédéterminée (Rs) qui est incluse dans la zone avant et latérale ; et
inclure, dans le deuxième cas, comme condition de sélection, une condition qui est satisfaite quand la deuxième cible (50, 60, 61) existe dans une deuxième zone spécifique prédéterminée (Rt) qui est incluse dans la zone avant et latérale et est plus étroite que la première zone spécifique (Rs) .

4. Appareil d'assistance d'évitement de collision selon la revendication 3,
dans lequel le dispositif d'acquisition d'information de véhicule (16) est configuré pour acquérir la valeur d'entrée de direction, et
dans lequel l'unité de commande (10) est, dans le deuxième cas, configurée pour :
calculer, sur la base de la valeur d'entrée de direction, un angle de braquage (θ) grâce auquel le propre véhicule (V) a tourné depuis un instant où le propre véhicule commence à tourner jusqu'à un instant courant ;
établir, comme deuxième zone spécifique (Rt), une zone comprenant une zone gauche (Rtl) et une zone droite (Rtr), la zone gauche (Rtl) comprenant au moins un côté avant en diagonale à gauche et un côté latéral gauche du propre véhicule et la zone droite (Rtr) comprenant au moins un côté avant en diagonale à droite et un côté latéral droit du propre véhicule, quand l'angle de braquage (θ) dépasse une valeur de seuil d'angle prédéterminée (θth) ; et
établir, comme deuxième zone spécifique (Rt), une de la zone gauche (Rtl) et de la zone droite (Rtr) qui est sur un côté de direction de virage du propre véhicule, quand l'angle de braquage (θ) est égal ou inférieur à la valeur de seuil d'angle (θth).

5. Appareil d'assistance d'évitement de collision selon l'une quelconque des revendications 2 à 4,
dans lequel, quand le nombre de cibles qui remplissent la condition de sélection dépasse un nombre de limite supérieure prédéterminé (n) dans chacun du premier cas et du deuxième cas, l'unité de commande (10) est configurée pour déterminer si chaque cible est détectée de manière continue sur la base de l'information de cible avant et latérale, et pour calculer une fiabilité de chaque cible sur la base d'un résultat de la détermination, et
dans lequel l'unité de commande (10) est configurée pour ajouter, comme condition de sélection, une condition de fiabilité qui est satisfaite quand une cible est une cible de grande fiabilité qui a une fiabilité égale ou supérieure à une valeur de seuil de fiabilité prédéterminée.

6. Appareil d'assistance d'évitement de collision selon la revendication 5,
dans lequel l'unité de commande (10) est configurée pour sélectionner des cibles dont le nombre est égal ou inférieur au nombre de limite supérieure (n) parmi les cibles incluses dans l'information de cible avant et latérale,
dans lequel, dans le premier cas, quand le nombre de cibles de grande fiabilité dépasse le nombre de limite supérieure (n), l'unité de commande (10) est configurée pour calculer, pour chacune des cibles de grande fiabilité, un temps simple jusqu'à la collision défini par une distance jusqu'au propre véhicule et une vitesse de la cible de grande fiabilité correspondante, et pour sélectionner le nombre de limite supérieure (n) des cibles de grande fiabilité dans un ordre d'une première priorité qui augmente à mesure que le temps simple jusqu'à la collision diminue, et
dans lequel, dans le deuxième cas, quand le nombre de cibles de grande fiabilité dépasse le nombre de limite supérieure (n), l'unité de commande (10) est configurée pour sélectionner le nombre de limite supérieure (n) des cibles de grande fiabilité dans un ordre d'une deuxième priorité qui augmente à mesure que la distance diminue.

7. Appareil d'assistance d'évitement de collision selon la revendication 5 ou 6,
dans lequel l'unité de commande (10) est configurée pour sélectionner des cibles dont le nombre est égal ou inférieur au nombre de limite supérieure (n) parmi les cibles incluses dans l'information de cible avant et latérale,
dans lequel, dans le premier cas, quand le nombre de cibles de grande fiabilité est plus petit que le nombre de limite supérieure (n), l'unité de commande (10) est configurée pour calculer, pour chacune des cibles de faible fiabilité qui ne remplissent pas la condition de fiabilité, un temps simple jusqu'à la collision définie par une distance jusqu'au propre véhicule et une vitesse de la cible de faible fiabilité correspondante, et pour sélectionner les cibles de faible fiabilité dans un ordre d'une première priorité qui augmente à mesure que le temps simple jusqu'à la collision diminue de telle sorte qu'une somme du nombre des cibles de grande fiabilité et du nombre des cibles de faible fiabilité correspond au nombre de limite supérieure (n), et
dans lequel, dans le deuxième cas, quand le nombre de cibles de grande fiabilité est plus petit que le nombre de limite supérieure (n), l'unité de commande (10) est configurée pour sélectionner les cibles de faible fiabilité dans un ordre d'une deuxième priorité qui augmente lorsque la distance diminue de telle sorte qu'une somme du nombre des cibles de grande fiabilité et du nombre des cibles de faible fiabilité correspond au nombre de limite supérieure (n).

8. Appareil d'assistance d'évitement de collision selon la revendication 2, dans lequel, dans le deuxième cas, l'unité de commande (10) est configurée pour inclure, comme condition de sélection, en plus de la condition qui est satisfaite quand une cible est la deuxième cible, une condition de sélection d'un nombre prédéterminé, qui est plus petit que le nombre de limite supérieure (n), des premières cibles (53, 62) qui existent dans une première zone spécifique prédéterminée (Rs) qui est incluse dans la zone avant et latérale.
